# EUROPEAN PATENT SPECIFICATION

(11) **EP 3 401 161 B1**
(45) Date of publication and mention of the grant of the patent: **09.02.2022**
(21) Application number: 18171663.0
(22) Date of filing: 09.05.2018
(51) Int. Cl.: B60Q 1/04, B60R 1/00, F21S 41/125, F21S 41/30, F21S 41/657, F21S 41/67

(54) **ROAD SURFACE DRAWING SYSTEM, LIGHTING TOOL FOR VEHICLE AND METHOD OF ROAD SURFACE DRAWING**
STRASSENOBERFLÄCHENZEICHENSYSTEM, BELEUCHTUNGSWERKZEUG FÜR FAHRZEUG UND VERFAHREN ZUM STRASSENOBERFLÄCHENZEICHNEN
SYSTÈME DE DESSIN DE SURFACE DE ROUTE, OUTIL D'ÉCLAIRAGE POUR VÉHICULE ET PROCÉDÉ DE DESSIN DE SURFACE DE ROUTE

(30) Priority: 12.05.2017 JP 2017095726; 12.05.2017 JP 2017095727
(43) Date of publication of application: 14.11.2018
(73) Proprietor: STANLEY ELECTRIC CO., LTD., Tokyo 153-8636 (JP)
(72) Inventor: KOGURE, Shinya, Tokyo, 153-8636 (JP)
(74) Representative: Emde, Eric

(56) References cited:
- EP-A2- 1 334 869
- WO-A1-2015/193996
- WO-A1-2016/163295
- WO-A1-2016/167250
- CN-A- 104 842 860
- US-A1- 2015 224 926

## Description

### BACKGROUND

### Field of the Invention

The present invention relates to a road surface drawing system and a method of road surface drawing.

### Description of Related Art

JP 2015-153057 A discloses a driving support apparatus for projecting a support pattern that performs a warning notice related to a vehicle speed or a suitable steering with respect to a driver on a road surface in front of an own vehicle according to road information and a traveling state.

In addition, in the related art, a lighting tool for a vehicle configured to display an image that shows information on a road surface using contrast of light is proposed as a lighting tool for a vehicle. In a lighting tool for a vehicle disclosed in JP 4059079 B, information formed by a reflection type digital light deflection apparatus is displayed on a road surface.

WO 2016/163295 A1 discloses a video projecting device which projects video images, and comprises a sensor unit that acquires information pertaining to a vehicle, and an image projection unit that projects video images on the basis of information acquired by the sensor unit.

CN 104 842 860 A discloses a driving route indicating method and system applied to intelligent driving vehicles and belongs to the technical field of vehicles with an aim to solve the problem about how to efficiently indicate routes that the vehicles are about to drive on in the prior art. The method includes: A, establishing connection; B, receiving and analyzing a data packet; C, controlling and adjusting horizontal rotational ranges of laser lamp units according to route planning information; D, determining laser projection distance and controlling and adjusting pitching angles of lasers according to vehicle speed information. The system comprises a plurality of lasers, a plurality of electric supports used for adjusting the pitching angles of the lasers and an on-board control unit used for receiving the information, each laser comprises laser controllers and a plurality of laser lamp units correspondingly connected with the laser controllers, the electric supports and the laser controllers are respectively connected with the output end of the on-board control unit, and the on-board control unit performs adjustment on the beam angle and projection distance according to the route planning information and vehicle speed.

EP 1 334 869 A2 discloses a beam radiator that radiates visible light beams having a predetermined wavelength onto a road surface to inform drivers of other vehicles of the existence of a self-owned vehicle or to let a driver of the self-owned vehicle confirm a traveling path thereof. The beam radiator is disposed in a front portion of a body of the self-owned vehicle. An optical filter is disposed substantially all over a windshield in front of a driver seat. The filter is designed to have a characteristic of being more permeable to light having wavelengths close to a wavelength of visible light beams radiated from the beam radiator than to light having a wavelength different from those wavelengths.

WO 2015/193996 A1 discloses a headlight device which has a projection function, and is provided with: a light source device; an illumination optical system; a video display element; a video-signal control unit; and a projection optical system. The projection optical system is configured so as to have, provided therein from the video display element side, a coaxial lens system having refractive action, a free-form surface lens, and a free-form surface mirror.

US 2015/224926 A1 discloses a driving support apparatus which includes a projecting unit configured to project a predetermined support pattern on a road surface ahead of an own vehicle; and a driving support control unit configured to control a projection state of the support pattern. The driving support control unit is configured to detect information of a road on which the own vehicle is travelling by a road information detecting unit, to detect a traveling state of the own vehicle by a travelling state detecting unit, the traveling state including at least one of a vehicle speed and a steering direction, to determine a proper vehicle speed and proper steering based on the detected road information and the detected traveling state by determining units, and to project the support pattern as a moving image based on the determination by a projection control unit.

WO 2016/167250 A1 discloses a vehicle lamp provided with a scanning light source. The scanning light source includes a semiconductor light source, and scans light emitted from the semiconductor light source in front of the lamp. A lighting circuit synchronizes with the scanning of the scanning light source and changes, over multiple levels, the light intensity of the semiconductor light source.

### SUMMARY

A driver changes a position of a viewpoint to which she or he is paying attention according to a vehicle speed. That is, a driver pays attention to the distance of a vehicle when the vehicle travels at a high speed and pays attention to the vicinity of the vehicle when the vehicle travels at a low speed. Focusing on this point, the inventors have conceived to change a display position of an image for a warning notice according to a speed of the vehicle.

An aspect of the present invention is to provide a road surface drawing system in which an effect of a warning notice to a driver is increased by varying a display position of an image according to a speed of a vehicle.

In addition, when uniform light is projected from a vehicle onto a road surface, since a luminous density of light that enters a road surface is decreased as a distance from the vehicle is increased, an illuminance on the road surface is decreased further from the vehicle.

In order to make the illuminance on the road surface uniform, it is conceivable to weaken light projected to the vicinity of the vehicle using a reflection type digital light deflection apparatus. However, in this case, since efficiency of utilization of light radiated from a light source is decreased, there is a problem in that energy efficiency of a vehicle lighting tool is degraded.

Also disclosed is a lighting tool for a vehicle and road surface drawing system capable of making illuminance on a road surface substantially uniform while minimizing a decrease in efficiency of utilization of light.

A road surface drawing system of an aspect of the present invention is provided as set forth in claim 1.

In addition, a method of drawing an image that emphasizes a traveling path of a vehicle on a road surface in front of the vehicle is another aspect of the present invention, and the method is provided as set forth in claim 9.

### BRIEF DESCRIPTION OF THE DRAWINGS

FIG. 1 is a schematic view of a road surface drawing system according to a first embodiment.
FIG. 2 is a schematic view showing a projection module of the first embodiment.
FIG. 3 is a schematic view of a light source unit of the first embodiment.
FIG. 4A is a view showing an example of an image from the road surface drawing system according to the first embodiment.
FIG. 4B is a view showing an example of an image from the road surface drawing system according to the first embodiment.
FIG. 4C is a view showing an example of an image from the road surface drawing system according to the first embodiment.
FIG. 5A is a view showing an example of an image from the road surface drawing system according to the first embodiment.
FIG. 5B is a view showing an example of an image from the road surface drawing system according to the first embodiment.
FIG. 5C is a view showing an example of an image from the road surface drawing system according to the first embodiment.
FIG. 6 is a perspective view of a reflecting apparatus of Variant 1.
FIG. 7A is a view showing a state in which a road surface is irradiated using a reflecting section for a short range in the reflecting apparatus of Variant 1.
FIG. 7B is a view showing a state in which a road surface is irradiated using a reflecting section for an intermediate range in the reflecting apparatus of Variant 1.
FIG. 7C is a view showing a state in which a road surface is irradiated using a reflecting section for a long range in the reflecting apparatus of Variant 1.
FIG. 8 is a schematic view showing a projection module of a road surface drawing system of Variant 2.
FIG. 9 is a schematic view showing a portion of a road surface drawing system of Variant 3.
FIG. 10 is a schematic view showing an example of a light distribution pattern and an image formed by the road surface drawing system of Variant 3.
FIG. 11 is a schematic view of a lighting tool for a vehicle according to a second embodiment.
FIG. 12 is a schematic view showing a projection module of the second embodiment.
FIG. 13 is a schematic view of a light source unit of the second embodiment.
FIG. 14A is a view showing an example of a drawing from the lighting tool for a vehicle according to the second embodiment.
FIG. 14B is a view showing an example of a drawing from the lighting tool for a vehicle according to the second embodiment.
FIG. 14C is a view showing an example of a drawing from the lighting tool for a vehicle according to the second embodiment.
FIG. 15A is a view showing an example of a drawing from the lighting tool for a vehicle according to the second embodiment.
FIG. 15B is a view showing an example of a drawing from the lighting tool for a vehicle according to the second embodiment.
FIG. 15C is a view showing an example of a drawing from the lighting tool for a vehicle according to the second embodiment.
FIG. 16 is a perspective view of a reflecting apparatus of Variant 4.
FIG. 17A is a view showing a state in which a road surface is irradiated using a reflecting section for a short range in the reflecting apparatus of Variant 4.
FIG. 17B is a view showing a state in which a road surface is irradiated using a reflecting section for an intermediate range in the reflecting apparatus of Variant 4.
FIG. 17C is a view showing a state in which a road surface is irradiated using a reflecting section for a long range in the reflecting apparatus of Variant 4.
FIG. 18 is a schematic view showing a projection module of a lighting tool for a vehicle of Variant 5.

### DESCRIPTION OF EMBODIMENTS

### First embodiment

Hereinafter, a road surface drawing system according to a first embodiment will be described with reference to the accompanying drawings.

In the drawings used in the following description, for the convenience' sake, characteristic parts may be shown in an enlarged manner so that features can be easily understood, and dimensional ratios or the like of components may not be the same as those in actuality.

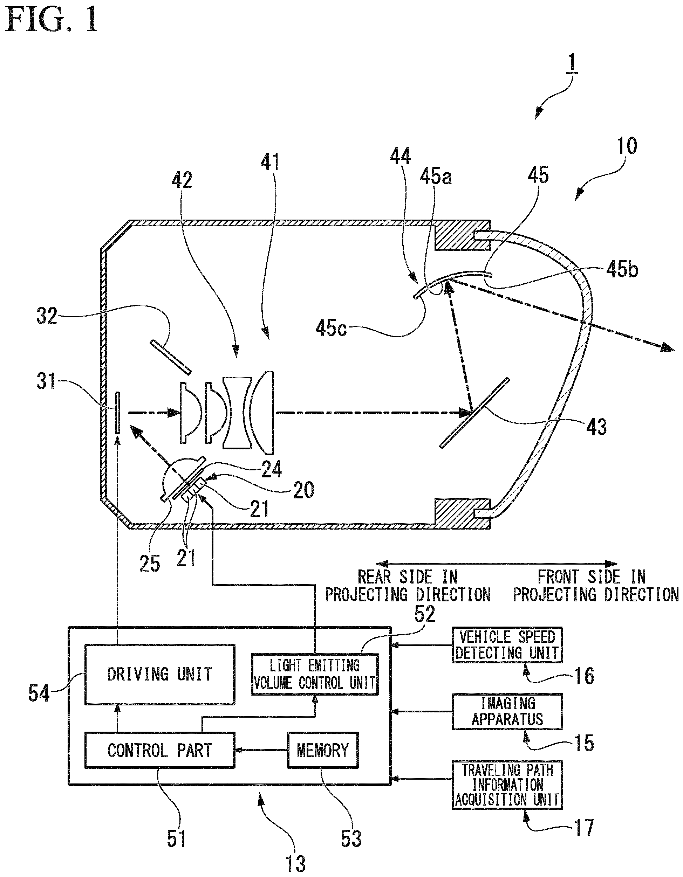

FIG. 1 is a schematic view of a road surface drawing system 1 according to a first embodiment. The road surface drawing system 1 of the embodiment is an apparatus mounted on a vehicle and draws an image that emphasizes a traveling path of the vehicle on a road surface in front of the vehicle.

The road surface drawing system 1 according to the embodiment includes a projection module (a traveling path drawing unit) 10, a vehicle speed detecting unit 16, an imaging apparatus (a traveling path recognition unit) 15, a traveling path information acquisition unit 17 and a control unit 13. The projection module 10 radiates light to a road surface to draw an image. The control unit 13 controls a traveling path drawing unit. The vehicle speed detecting unit 16 detects a speed of the vehicle and transmits the detected speed to the control unit 13. The imaging apparatus 15 detects a situation in the front and transmits the detected situation to the control unit 13.

First, the road surface drawing system 1 detects a speed of the vehicle in the vehicle speed detecting unit 16 while imaging an image in front of the vehicle in the imaging apparatus 15 installed at the front of the vehicle (for example, on the side of a front glass of a rearview mirror). In addition, the road surface drawing system 1 acquires road conditions from the outside in the traveling path information acquisition unit 17. Next, the control unit 13 analyzes image information acquired by the imaging apparatus 15 and information acquired by the traveling path information acquisition unit 17 and determines an image (a drawing) 58 to display. Further, the projection module 10 is controlled based on the information of the speed of the vehicle acquired by the vehicle speed detecting unit 16, and the image 58 is drawn on a road surface 57 in front of the vehicle.

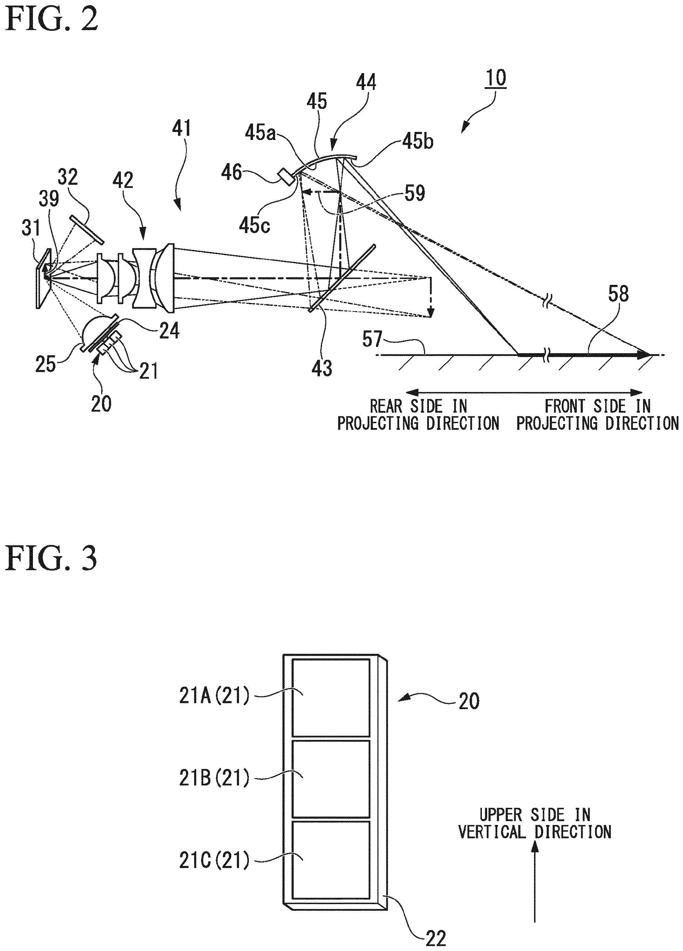

FIG. 2 is a schematic view showing the projection module 10 of the embodiment.

The projection module 10 of the embodiment includes a light source unit 20, a diffusion plate 24, an incident optical system 25, an image generating unit 31 and a projecting optical system (a projecting unit) 41.

The light source unit 20 is an array light source in which a plurality of light sources 21 are arranged to configure an array light emitting surface. That is, the light source unit 20 has the plurality of light sources 21. The light sources 21 emit visible light. A light emitting diode (LED) light source or a laser light source may be employed as the light source 21. The plurality of light sources 21 are individually turned on and off by a light emitting volume control part52, and thus a light emitting volume is controlled. That is, the light emitting volume of the light sources 21 can be adjusted from 100% at which the light emitting volume is maximized to 0%, which is a state in which the light sources 21 are completely turned off. The light sources 21 are in an off state when the light emitting volume is 0%.

FIG. 3 is a schematic view of the light source unit 20 of the embodiment. The light source unit 20 of the embodiment has the three light sources 21 and a package section 22 for a light source. In the embodiment, the three light sources 21 are arranged in an upward/downward direction (a vertical direction) of the vehicle. In addition, the three light sources 21 are contained in the package section 22 for a light source. A slight gap is formed between the neighboring light sources 21.

While the case in which the light source unit 20 has the three light sources 21 has been described in the embodiment, the number of the light sources 21 is not limited as long as the light source unit 20 has the plurality of light sources 21. In addition, while the plurality of light sources 21 of the light source unit 20 are arranged in the upward/downward direction in the embodiment, the light sources 21 may be arranged in a direction perpendicular to a widthwise direction of the vehicle. As the light sources 21 are arranged in this way, light distribution regions formed on a road surface by light emitted from the light sources 21 can be formed to be arranged in the forward/rearward direction of the vehicle. In addition, an array light source in which the plurality of light sources are arranged in vertical and horizontal directions may be employed as a variant of the light source unit. In this case, among the arranged light sources, the light radiated from the light sources arranged in one direction is arranged in the forward/rearward direction of the vehicle on the projected road surface.

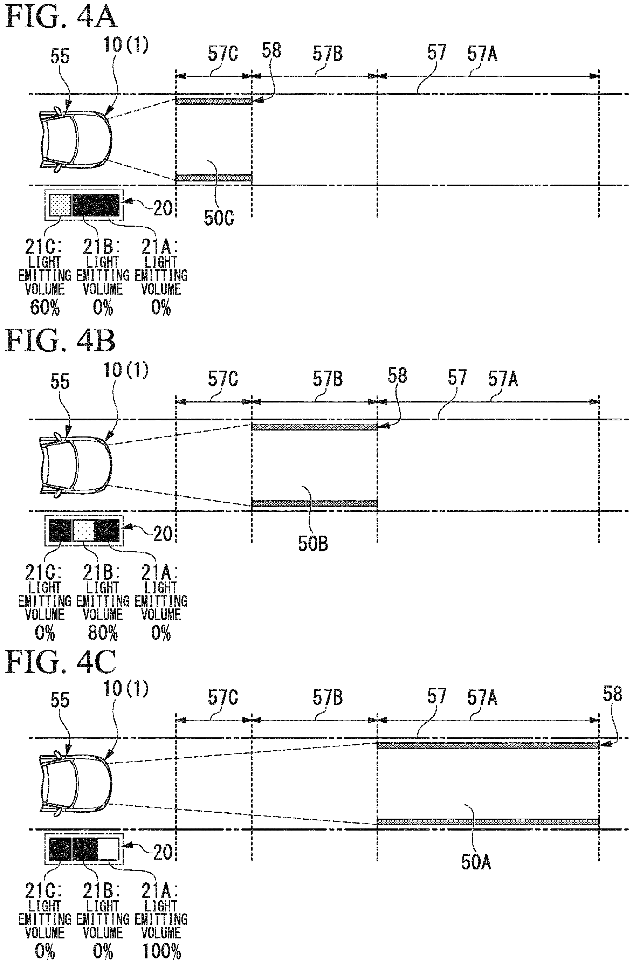

Among the three light sources 21 arranged in the upward/downward direction, the light source disposed at the uppermost side is a first light source 21A, the light source disposed at the lowermost side is a third light source 21C, and the light source disposed between the first light source 21A and the third light source 21C is a second light source 21B. In order to describe the light sources below based on FIG. 4A to FIG. 4C, the first light source 21A forms a light distribution region (a first light distribution region 50A) at a position on the road surface 57 farthest from a vehicle 55. The third light source 21C forms a light distribution region (a third light distribution region 50C) at a position on the road surface 57 nearest to the vehicle 55. In addition, the second light source 21B forms a light distribution region (a second light distribution region 50B) between those of the first light source 21A and the third light source 21C on the road surface 57. That is, the plurality of light sources 21 arranged in an arrangement direction perpendicular to the widthwise direction of the vehicle form a plurality of light distribution regions that are aligned on the road surface from a near side of the vehicle toward a far side of the vehicle, respectively.

The diffusion plate 24 is disposed between the light source unit 20 and the incident optical system 25. The diffusion plate 24 allows diffusion and transmission of the entering light. The light emitted from the light source unit 20 and passing through the diffusion plate 24 enters the incident optical system 25 in a state in which a light diameter is enlarged.

In addition, when a light source configured to emit light other than white light is used as the light source 21, a fluorescent body plate configured to receive light radiated from the light sources 21 and radiate white light having diffusibility may be used as the diffusion plate 24. As an example, when the light sources 21 radiate blue light (that may include ultraviolet light), the blue light that enters the fluorescent body plate (the diffusion plate 24) including fluorescent body particles therein passes through the fluorescent body plate while being diffused therein, and a wavelength of some of the blue light is converted by the fluorescent body particles. The blue light emitted from the light sources 21 and the yellow light discharged by excitation of the fluorescent body particles are mixed, and as a result, the white light having diffusibility is radiated from the fluorescent body plate. Further, a dispersing agent that diffuses blue light in the fluorescent body plate may be added to the fluorescent body plate.

As described above, in the light source unit 20, a slight gap is formed between the neighboring light sources 21 (see FIG. 3). When the light radiated from the light sources 21 is projected to the road surface, the gap between the light sources 21 may cause formation of a dark section in the image 58 on the road surface 57. According to the embodiment, as the diffusion plate 24 is disposed between the light source unit 20 and the incident optical system 25, the light radiated from the light source unit 20 can be blurred and enter the incident optical system 25, and formation of the dark section in the image 58 on the road surface 57 can be minimized.

As shown in FIG. 2, the incident optical system 25 condenses light from the light sources 21 and irradiates the reflection control surface of the image generating unit 31 with the light. The incident optical system 25 is constituted by one or a plurality of lenses, or the like.

The image generating unit 31 modulates the light emitted from the light sources 21 and generates an image. In the embodiment, the image generating unit 31 is constituted by a reflection type digital light deflection apparatus (a digital mirror device (DMD)). The image generating unit 31 constituted by the reflection type digital light deflection apparatus has a reflection control surface configured by arranging a plurality of tiltable mirror elements.

In the plurality of mirror elements of the image generating unit 31, each tilting angle is controlled toward a reflection side or a light shielding side according to a signal from the control unit 13. The image generating unit 31 generates a reflection pattern (an image) 39 having an arbitrary shape using the reflected light of the plurality of mirror elements that are tilted toward the reflection side. In the example shown in FIG. 2, the image generating unit 31 generates a reflection pattern 39 of an arrow shape.

Further, a light shielding member 32 configured to shield light from the mirror elements that are tilted toward the light shielding side is installed on the projection module 10.

The projecting optical system 41 radiates the reflection pattern 39 generated in the image generating unit 31 to the front of the vehicle as the image 58 and projects the reflection pattern 39 on the road surface 57. The projecting optical system 41 includes a light condensing optical system 42, a return mirror 43 and a reflecting apparatus 44. The projecting optical system 41 radiates the image 58 in the plurality of light distribution regions.

The light condensing optical system 42 is constituted by one or a plurality of lenses, or the like. The light condensing optical system 42 radiates the reflection pattern 39 generated by the image generating unit 31 to a reflecting section 45 of the reflecting apparatus 44 via the return mirror 43. In addition, the light condensing optical system 42 condenses the reflection pattern 39 emitted from the image generating unit 31 and images an intermediate image 59.

The return mirror 43 is a mirror configured to reflect the light from the light condensing optical system 42 toward the reflecting section 45.

The reflecting apparatus 44 has the reflecting section 45. The reflecting section 45 reflects the light condensed by the light condensing optical system 42 toward the road surface 57. The reflecting section 45 is a concave surface reflector for enlargement projection. The reflecting section 45 has a reflecting surface 45a. That is, the projecting optical system 41 has the reflecting surface 45a. The reflecting section 45 reflects the light condensed by the light condensing optical system 42 in the reflecting surface 45a and projects the reflected light to a predetermined region of the road surface 57. The reflecting surface 45a is a concave surface shape constituted by a non-spherical free curved surface.

The reflecting surface 45a is disposed downstream from the intermediate image 59 formed by the light condensing optical system 42. Accordingly, the light is imaged upstream from the reflecting surface 45a, enters the reflecting surface 45a having a concave surface shape while spreading in the diffusion direction, and is condensed again by being reflected by the reflecting surface 45a.

Further, in the description, "upstream" and "downstream" refer to a sequential relation along a transmittance path of light (i.e., an upstream side and a downstream side in an optical path), and do not refer to disposition of areas in the projection module 10.

A region 45b in front of the reflecting surface 45a in a projecting direction reflects light toward the road surface 57 on the side near the vehicle. In addition, a region 45c in rear of the reflecting surface 45a in the projecting direction reflects light toward the road surface 57 on the side far from the vehicle. The reflecting surface 45a is formed by continuously varying a curvature according to a distance from a projecting target (from the side near the vehicle to the side far from the vehicle on the road surface 57) from the region 45c on the rear side in the projecting direction toward the region 45b on the front side in the projecting direction. That is, the reflecting surface 45a has a curvature that is gradually increased from the rear side in the projecting direction toward the front side in the projecting direction. Accordingly, in comparison with the region 45c on the rear side in the projecting direction in which the light is reflected toward the side far from the vehicle, the light is reflected by the region 45b on the front side in the projecting direction in which the light is reflected toward the side near the vehicle, a distance between a region in which light is reflected by the reflecting surface 45a and a region in which an image is formed on the road surface 57 that is an image plane of the road surface 57 can be reduced, and out of focus of the imaged image 58 can be minimized.

According to the embodiment, the reflecting section 45 configured to reflect the light including the image 58 toward the road surface 57 is formed by continuously varying a curvature according to a distance from a projecting target (from the side near the vehicle to the side far from the vehicle on the road surface). Accordingly, the image can be clearly displayed on the road surface 57, and the image 58 having high quality in which areas that are out of focus do not occur can be formed.

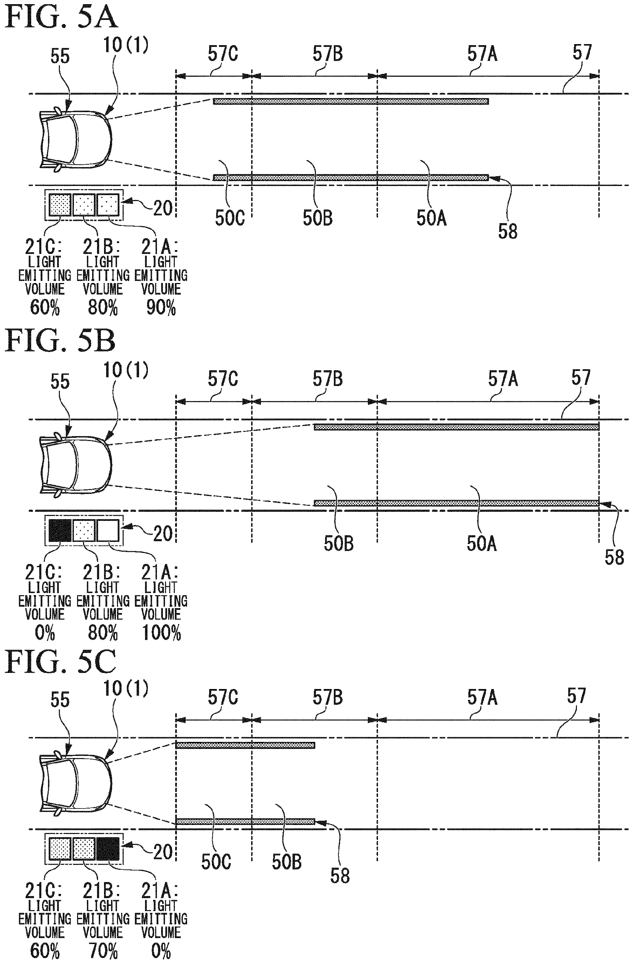

Next, the image 58 drawn by the road surface drawing system 1 will be described with reference to FIG. 4A to FIG. 4C and FIG. 5A to FIG. 5C.

As shown in FIG. 4A to FIG. 4C and FIG. 5A to FIG. 5C, the road surface drawing system 1 including the projection module 10 is mounted on the vehicle 55, and radiates light from the vehicle 55 toward the road surface 57. In addition, the road surface drawing system 1 performs a predetermined drawing that emphasizes a traveling path of the vehicle 55 on the road surface 57 in front of the vehicle 55. In the embodiment, the road surface drawing system 1 draws a pair of rod-shaped lanes extending in the traveling direction of the vehicle 55 as the predetermined image 58 that emphasizes the traveling path. The pair of rod-shaped lanes are disposed to be slightly wider than a vehicle width of the vehicle 55.

FIG. 4A to FIG. 4C are views showing examples of the image 58 drawn on the road surface 57 when light is emitted from only the third light source 21C, the second light source 21B and the first light source 21A, respectively. A first road surface region 57A, a second road surface region 57B and a third road surface region 57C that are sequentially arranged from a region far from the vehicle 55 toward a region near the vehicle 55 are set on the road surface 57 in front of the vehicle 55. The first to third light sources 21A to 21C form the first to third light distribution regions 50A to 50C in the first to third road surface regions 57A to 57C on the road surface 57. The road surface drawing system 1 draws the image 58 on the first to third road surface regions 57A to 57C at display positions of the image 58 by controlling light emitting volumes of the first to third light sources 21A to 21C.

FIG. 4A is a view showing the image 58 when the third light source 21C is lit up and the first light source 21A and the second light source 21B are turned off. Specifically, FIG. 4A is a view showing an example of the image 58 drawn on the road surface 57 when a light emitting volume of the third light source 21C is set to 60% and light emitting volumes of the second light source 21B and the first light source 21A are set to 0%. The light radiated from the first light source 21A forms a reflected image as the light is reflected in the image generating unit 31, and further forms the image 58 in the first light distribution region 50A on the road surface 57.

When the vehicle 55 travels at a relatively low speed (for example 30 km/hour), the image 58 is preferably displayed on the third road surface region 57C only as shown in FIG. 4A. This is because necessity to display the image on the distant region is low since a driver's attention is directed to the side near the vehicle 55 when the vehicle 55 travels at a low speed. In addition, this is because the image 58 could interfere with operation by a driver of another vehicle since a vehicle-to-vehicle distance with respect to other vehicles that travel in front of the vehicle 55 is small when the vehicle 55 travels at a low speed. According to the embodiment, when the image 58 is displayed only on a region of the road surface 57 in the vicinity of the vehicle 55 (i.e., the third road surface region 57C), the other light sources (the first and second light sources 21A and 21B) that handle the other regions (the first and second road surface regions 57A and 57B) can be turned off, and the road surface drawing system 1 having high energy efficiency can be realized.

FIG. 4B is a view showing the image 58 when the second light source 21B is lit up and the first light source 21A and the third light source 21C are turned off. Specifically, FIG. 4B is a view showing an example of the image 58 drawn on the road surface 57 when a light emitting volume of the second light source 21B is set to 80% and light emitting volumes of the first light source 21A and the third light source 21C are set to 0%. The light radiated from the second light source 21B forms a reflected image as the light is reflected in the image generating unit 31, and further forms the image 58 in the second light distribution region 50B on the road surface 57.

When the vehicle 55 travels at a medium speed (for example, 60 km/hour), as shown in FIG. 4B, the image 58 is preferably displayed only on a region spaced a certain distance from the vehicle 55 of the road surface 57 (i.e., the second road surface region 57B). According to the embodiment, when the image 58 is displayed only on the second road surface region 57B, the first and third light sources 21A and 21C can be turned off, and the road surface drawing system 1 having high energy efficiency can be realized.

FIG. 4C is a view showing the image 58 when the first light source 21A is lit up and the second light source 21B and the third light source 21C are turned off. Specifically, FIG. 4C is a view showing an example of the image 58 drawn on the road surface 57 when a light emitting volume of the first light source 21A is set to 100% and light emitting volumes of the second light source 21B and the third light source 21C are set to 0%. The light radiated from the third light source 21C forms a reflected image as the light is reflected in the image generating unit 31, and further the image 58 is formed in the third light distribution region 50C on the road surface 57.

When the vehicle 55 travels at a high speed (for example, 100 km/hour), as shown in FIG. 4C, the image 58 is preferably displayed only on the region of the road surface 57 farthest from the vehicle 55 (i.e., the first road surface region 57A). This is because necessity to display an image on the near region is low since a driver's attention is directed to a far side of the vehicle 55 when the vehicle 55 travels at a high speed. According to the embodiment, when the image 58 is displayed only on the first road surface region 57A, the second and third light sources 21B and 21C can be turned off, and the road surface drawing system 1 having high energy efficiency can be realized.

As shown in FIG. 4A to FIG. 4C, a display length of the image 58 is preferably increased in the traveling direction of the vehicle 55 while varying a display position of the image 58 as a speed of the vehicle 55 is increased. Further, the display length of the image 58 in the traveling direction of the vehicle 55 can be easily varied by adjusting a shape of a reflected image formed in the image generating unit 31. Accordingly, a range of the image 58 that is visually recognized by a driver in the vehicle 55 can be sufficiently widened as the speed of the vehicle 55 is increased.

Further, in FIG. 4A to FIG. 4C, a display length of the image 58 in the traveling direction of the vehicle 55 is schematically displayed and different from an actual length.

In the road surface drawing system 1, since the light is radiated diagonally from a certain height of the vehicle 55 toward the road surface, a luminous density of the light entering the road surface is decreased as a distance from the vehicle 55 is increased. Accordingly, when uniform light is radiated from the road surface drawing system 1 to the road surface 57, an illuminance of the image 58 on the road surface 57 is decreased when displayed at a position separated from the vehicle 55. In the embodiment, light emitting volumes of the first to third light sources 21A to 21C are individually controlled by the light emitting volume control part 52. More specifically, a light emitting volume of the third light source 21C is set to 60% when the third road surface region 57C is irradiated with light, a light emitting volume of the second light source 21B is set to 80% when the second road surface region 57B is irradiated with light, and a light emitting volume of the first light source 21A is set to 100% when the first road surface region 57A is irradiated with light. That is, the light emitting volumes of the light sources (the first to third light sources 21A to 21C) can be adjusted according to distances of the formed light distribution regions (the first to third light distribution regions 50A to 50C) from the vehicle 55. Accordingly, even when the light sources 21 are switched to vary a position of the image 58, brightness of the image 58 on the road surface can be constantly maintained. In addition, according to the embodiment, as the light emitting volumes of the light sources 21 are adjusted and a configuration in which brightness of the image 58 is constantly maintained according to a variation of the display position is employed, the road surface drawing system 1 having high energy efficiency can be realized.

Further, the image generating unit 31 can drive ON and OFF of reflection by inclinations of mirror elements and adjust a duty ratio of ON and OFF. In the embodiment, the duty ratio of the image generating unit 31 may be adjusted and an illuminance in a single light distribution region may be adjusted according to the distance from the vehicle 55. In this case, as the region gets closer to the vehicle 55, a time in which the adjusted duty ratio is turned OFF is increased.

FIG. 5A is a view showing the image 58 when the image 58 is displayed throughout the first to third road surface regions 57A to 57C. In FIG. 5A, the first to third light sources 21A to 21C emit light. The light radiated from the first to third light sources 21A to 21C forms the image 58 in the first to third light distribution regions 50A to 50C on the road surface 57. In the state shown in FIG. 5A, a light emitting volume of the first light source 21A corresponding to the first light distribution region 50A is 90%, a light emitting volume of the second light source 21B corresponding to the second light distribution region 50B is 80%, and a light emitting volume of the third light source 21C corresponding to the third light distribution region 50C is 60%.

Further, each of the light emitting volumes of the light sources are adjusted with reference to a light emitting volume at which a light emitting volume of the light source is sufficiently obtained even at a farthest portion from the vehicle among the respective corresponding road surface regions.

FIG. 5B is a view showing the image 58 when the image 58 is displayed throughout the first and second road surface regions 57A and 57B. In FIG. 5B, the first and second light sources 21A and 21B emit light. The light radiated from the first and second light sources 21A and 21B forms the image 58 in the first and second light distribution regions 50A and 50B on the road surface 57. In the state shown in FIG. 5B, a light emitting volume of the first light source 21A corresponding to the first light distribution region 50A is 100%, a light emitting volume of the second light source 21B corresponding to the second light distribution region 50B is 80%, and the third light source 21C corresponding to the third light distribution region 50C is turned off.

FIG. 5C is a view showing the image 58 when the image 58 is displayed throughout the second and third road surface regions 57B and 57C. In FIG. 5C, the second and third light sources 21B and 21C emit light. The light radiated from the second and third light sources 21B and 21C forms the image 58 in the second and third light distribution regions 50B and 50C on the road surface 57. In the state shown in FIG. 5C, the first light source 21A corresponding to the first light distribution region 50A is turned off, a light emitting volume of the second light source 21B corresponding to the second light distribution region 50B is 70%, and a light emitting volume of the third light source 21C corresponding to the third light distribution region 50C is 60%.

According to the embodiment, as shown in FIG. 5A to FIG. 5C, as the light emitting volumes of the light sources (the first to third light sources 21A to 21C) are adjusted according to the distance of the formed light distribution regions (the first to third light distribution regions 50A to 50C) from the vehicle 55, uniformity of the illuminance on the road surface in the image 58 extending throughout a plurality of road surface regions can be increased.

Brightness in the vicinity of a boundary between the light distribution regions on the sides having a high light emitting volume (i.e., far sides) in the image 58 that bridges a pair of neighboring light distribution regions may be adjusted by adjusting a duty ratio of the image generating unit 31 in the embodiment. In this case, a difference of the illuminance on the road surface 57 may be reduced and drawing of the natural image 58 may be realized in the vicinity of the boundary between the pair of light distribution regions.

Returning to FIG. 1, a configuration of the road surface drawing system 1 will be described.

The imaging apparatus 15 functions as a traveling path recognition unit configured to recognize a traveling path in front of the vehicle by imaging and processing a forward side of the vehicle. The vehicle speed detecting unit 16 detects a speed of the vehicle. The vehicle speed detecting unit 16 is configured to directly acquire vehicle speed information from the vehicle. Information of a traveling path and a vehicle speed acquired by the imaging apparatus 15 and the vehicle speed detecting unit 16 is transmitted to a control part 51 of the control unit 13 as an electrical signal.

The control unit 13 has a memory 53 in which control information or the like of various images is previously set, the control part 51 configured to generate a control signal on the basis of electrical signals from the memory 53, the imaging apparatus 15 and the vehicle speed detecting unit 16, a driving unit 54 configured to drive the image generating unit 31 on the basis of the control signal, and the light emitting volume control part 52 configured to individually change light emitting volumes of the plurality of light sources 21. The control unit 13 generates an image by performing processing of controlling tilting states of the mirror elements of the image generating unit 31. In addition, the control unit 13 determines a position at which the image 58 is displayed on the road surface 57 based on information of a speed of the vehicle 55 acquired by the vehicle speed detecting unit 16, and adjusts the light emitting volumes of the plurality of light sources 21 using the light emitting volume control part 52.

### (Conclusion)

According to the road surface drawing system 1 of the embodiment, the control unit 13 changes a distance of the image 58 with respect to the vehicle 55 on the basis of the detection result of the vehicle speed detecting unit 16. Accordingly, the road surface drawing system 1 displays the image 58 on the road surface 57 far from the vehicle 55 when the speed of the vehicle 55 is high, and displays the image 58 on the road surface 57 near the vehicle 55 when the speed of the vehicle 55 is low.

That is, according to the road surface drawing system 1 of the embodiment, an effect of a warning notice by the image can be increased by displaying the image on a place that can be easily recognized by a driver.

In particular, in the embodiment, the plurality of light sources 21 form a plurality of light distribution regions (the first to third light distribution regions 50A to 50C) that are arranged on the road surface 57 from the side near the vehicle 55 toward the side far from the vehicle 55, respectively, and the control unit 13 switches a light emitting state of at least one of the light sources 21 on the basis of the detection result of the vehicle speed detecting unit 16. Accordingly, since a distance of the image 58 on the road surface 57 with respect to the vehicle 55 is varied, the image 58 can be displayed on a place that can be easily recognized by a driver without decreasing efficiency of utilization of light radiated from the light sources 21.

Further, in the specification, "switching a light emitting state of at least one light source" means that at least one of the plurality of light sources 21 is switched from ON to OFF or from OFF to ON. In this way, as the at least one light source 21 is switched from ON to OFF or from OFF to ON, a position of a center of the image 58 on the road surface 57 can be moved in the traveling direction of the vehicle 55.

According to the embodiment, the plurality of light sources 21 corresponding to the plurality of light distribution regions (the first to third light distribution regions 50A to 50C) arranged from the side near the vehicle 55 toward the side far from the vehicle 55 are installed in the road surface drawing system 1. In addition, the light emitting volumes of the plurality of light sources 21 are controlled by the light emitting volume control part 52. Accordingly, the illuminance on the road surface 57 can be adjusted at each of the plurality of light distribution regions formed on the road surface 57, and the illuminance on the road surface 57 of the side near the vehicle 55 and the side far from the vehicle 55 can be substantially uniform. More specifically, the light emitting volume control part 52 preferably performs control of causing the light emitting volume of the light source 21 that forms a light distribution region at the far side of the vehicle 55 among the plurality of light sources 21 to be larger than the light emitting volume of the light source 21 that forms a light distribution region at the near side of the vehicle 55. Accordingly, the light emitting volume of the light source 21 that illuminates the light distribution region located at the far side of the vehicle 55, among the plurality of light distribution regions formed on the road surface 57, can be increased, and the illuminance in the image 58 can be substantially uniform.

According to the embodiment, the reflecting surface 45a of the projecting optical system 41 has a configuration in which a curvature is gradually increased from a rear side in the projecting direction toward a front side in the projecting direction. Accordingly, as described above, it is possible to provide a lighting tool for a vehicle capable of minimizing out of focus of an image and clearly displaying an image on a road surface.

In the embodiment, the imaging apparatus 15 functions as a traveling path recognition unit configured to detect road conditions in front of the vehicle 55. In addition, the control unit 13 reflects a result recognized by the imaging apparatus 15 to the image 58. The road surface drawing system 1 performs drawing that emphasizes a traveling path on the road surface 57 by the projection module 10 on the basis of the recognized result acquired by the imaging apparatus 15. Accordingly, the road surface drawing system 1 can increase safety by assisting a driver's operation. For example, the control unit 13 may play the role of assisting a driver's visual recognition by curving a pair of rod-shaped lanes as the image 58 and flickering the image 58 according to a variation of the traveling path acquired by the imaging apparatus 15. In addition, the control unit 13 may determine whether the vehicle 55 is able to travel on the basis of the recognized result and reflect the determination result to the image 58 when an obstacle that impedes traveling of the vehicle 55 on the traveling path is recognized by the imaging apparatus 15.

Further, the road conditions acquired from the imaging apparatus 15 include a traffic lane, a curbstone, a state of a rut, or the like, on the road surface.

In the embodiment, the traveling path information acquisition unit 17 acquires the road conditions in front of the vehicle 55 from the outside. In addition, the control unit 13 reflects the information acquired by the traveling path information acquisition unit 17 to the image 58. According to the configuration, the road conditions acquired from the outside can be clearly acknowledged to a driver. Further, the road conditions acquired from the outside include information or the like acquired from a global positioning system (GPS) and a vehicle information and communication system (VICS, registered trademark).

In addition, it is also possible to obtain a method of drawing an image corresponding to the above mentioned road surface drawing system 1. In this case, for example, the method is a method of drawing an image that emphasizes a traveling path of a vehicle on a road surface in front of the vehicle, and the method includes: drawing the traveling path by drawing the image on the road surface by radiating light onto the road surface; and detecting a speed of the vehicle; wherein the drawing of the traveling path includes a step of modulating the radiated light and forming the image, and a step of projecting a light including the image to the road surface, and changing a distance between the image and the vehicle on the basis of a detection result of the detected vehicle speed.

### (Variant 1)

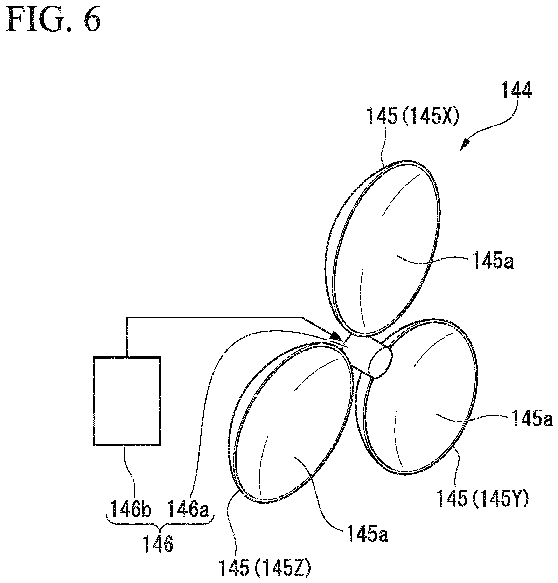

Next, a reflecting apparatus 144 of a variant that can be employed instead of the above-mentioned reflecting apparatus 44 will be described with reference to FIG. 6. Further, the same components as those of the above-mentioned embodiment are designated by the same reference numerals and description thereof will be omitted.

As shown in FIG. 6, the reflecting apparatus 144 of the variant has a plurality of (in the embodiment, three) reflecting sections 145, and a switching unit 146. The reflecting sections 145 reflect the light condensed by the light condensing optical system 42 toward the road surface 57. The switching unit 146 has a shaft section 146a, and a driving unit 146b configured to rotate and drive the shaft section 146a about a shaft thereof. The plurality of reflecting sections 145 are fixed to the shaft section 146a at equal intervals in the circumferential direction with respect to an axial center of the shaft section 146a. The switching unit 146 is disposed to switch one of the plurality of reflecting sections 145 to a light receiving position at which light radiated from the light condensing optical system 42 is received according to rotation of the shaft section 146a by the driving unit 146b.

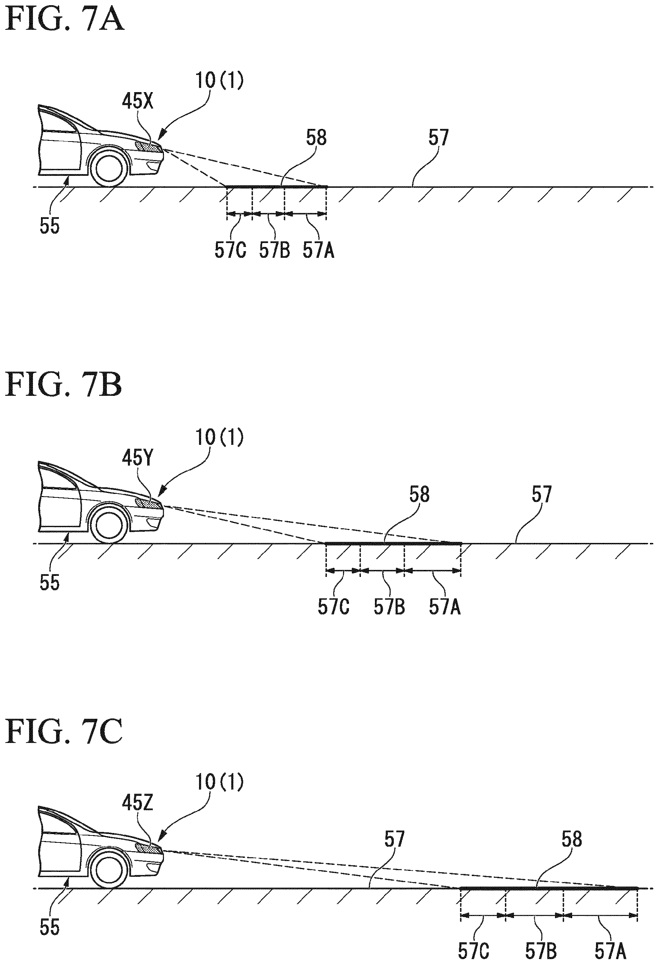

The reflecting apparatus 144 has a reflecting section 145X for a short range, a reflecting section 145Y for an intermediate range, and a reflecting section 145Z for a long range. Reflecting surfaces 145a of the reflecting sections 145X, 145Y and 145Z are set to reflect light toward the regions on the road surface 57 having different distances. The reflecting surfaces 145a of the reflecting section 145X for a short range, the reflecting section 145Y for an intermediate range and the reflecting section 145Z for a long range are formed to have curved surfaces having a larger average curvature as a reflected light is radiated closer. A state in which the image 58 is displayed on the road surface 57 using the reflecting section 145X for a short range is shown in FIG. 7A, a state in which the image 58 is displayed on the road surface 57 using the reflecting section 145Y for an intermediate range is shown in FIG. 7B, and a state in which the image 58 is displayed on the road surface 57 using the reflecting section 145Z for a long range is shown in FIG. 7C. As shown in FIG. 7A to FIG. 7C, regions on the road surface 57 that can be radiated by the reflecting sections 145X, 145Y and 145Z are different from each other. In addition, regions on the road surface 57 that can be radiated by the reflecting sections 145X, 145Y and 145Z are partitioned into the first to third road surface regions 57A to 57C corresponding to the first to third light sources 21A to 21C, respectively.

According to the variant, since the reflecting surfaces 145a of the plurality of reflecting sections 145 that reflect light toward the regions having different distances are switched by the switching unit 146, images can be clearly displayed at different distances on the road by the reflecting surfaces 145a. Accordingly, since the distance of the image 58 on the road surface 57 with respect to the vehicle 55 is varied, the image 58 can be displaced on a place that can be easily visually recognized by a driver without decreasing efficiency of utilization of light radiated from the light sources 21.

In addition, according to the variant, as curvatures of the reflecting surfaces 145a in the plurality of reflecting sections 145 that reflects light toward the regions having different distances are appropriately adjusted, the road surface drawing system 1 configured to clearly display images at the distances can be provided. In addition, when the reflected light is radiated to the long range, diffusion of light and a decrease in illuminance can be prevented.

In addition, the variant can exhibit the same effect as the above-mentioned embodiment. That is, outputs of the light sources corresponding to the plurality of road surface regions (the first to third road surface regions 57A to 57C) partitioned on the road surface 57 can be adjusted, and the illuminance of the road surface 57 on the side near the vehicle 55 and the side far from the vehicle 55 can be substantially uniform. In addition, like the above-mentioned embodiment, a duty ratio of the image generating unit 31 can be adjusted, and the illuminance in the light distribution region can be adjusted according to the distance from the vehicle 55.

### (Variant 2)

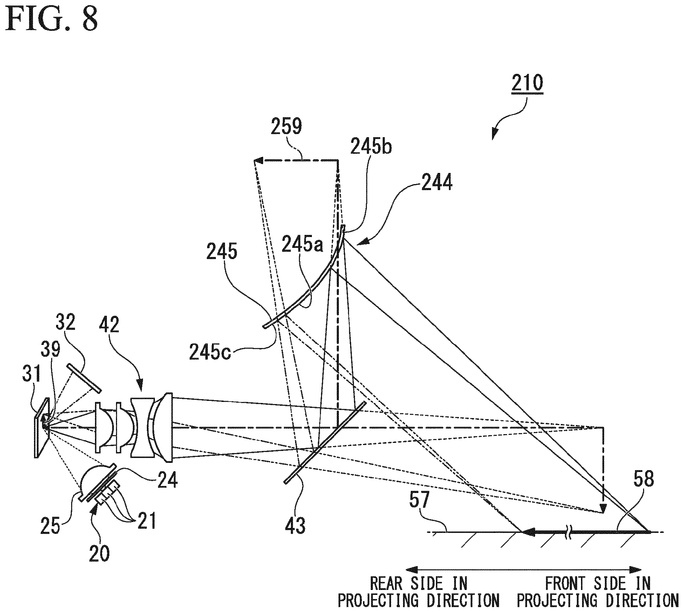

FIG. 8 is a schematic view showing a projection module (a traveling path drawing unit) 210 of Variant 2. Further, the components of the same aspect as the above-mentioned embodiment are designated by the same reference numerals and description thereof will be omitted.

The projection module 210 of the variant includes a reflecting apparatus 244 having a reflecting section 245.

The reflecting section 245 has a reflecting surface 245a formed in a convex surface shape. The reflecting surface 245a is disposed upstream from an intermediate image 259 formed by the light condensing optical system 42. Accordingly, light enters the reflecting surface 245a having the convex surface shape while being condensed, and enters the front side by adjusting a distance between a reflecting surface and an image plane using the reflecting surface 245a.

The reflecting surface 245a having the convex surface shape has a curvature that is gradually increased from the rear side in the projecting direction toward the front side in the projecting direction.

A region 245b in front of the reflecting surface 245a in the projecting direction reflects light toward the road surface 57 on the side far from the vehicle. In addition, a region 245c at rear of the reflecting surface 245a in the projecting direction reflects light toward the road surface 57 on the side near the vehicle. From the region 245c on the rear side in the projecting direction toward the region 245b on the front side in the projecting direction, the reflecting surface 245a is formed by continuously varying a curvature according to a distance from a projecting target (from the side near the vehicle to the side far from the vehicle on the road surface 57). That is, the reflecting surface 245a has a curvature that is gradually increased from the rear side in the projecting direction toward the front side in the projecting direction. Accordingly, in comparison with the region 245b on the front side in the projecting direction in which light is reflected toward the side far from the vehicle, the light can be reflected by the region 245c on the rear side in the projecting direction in which light is reflected toward the side near the vehicle, a distance between the region in which light is reflected by the reflecting surface 245a and the region in which an image is imaged on the road surface 57, which is an image plane, can be reduced, and out of focus of the imaged image 58 can be minimized.

### (Variant 3)

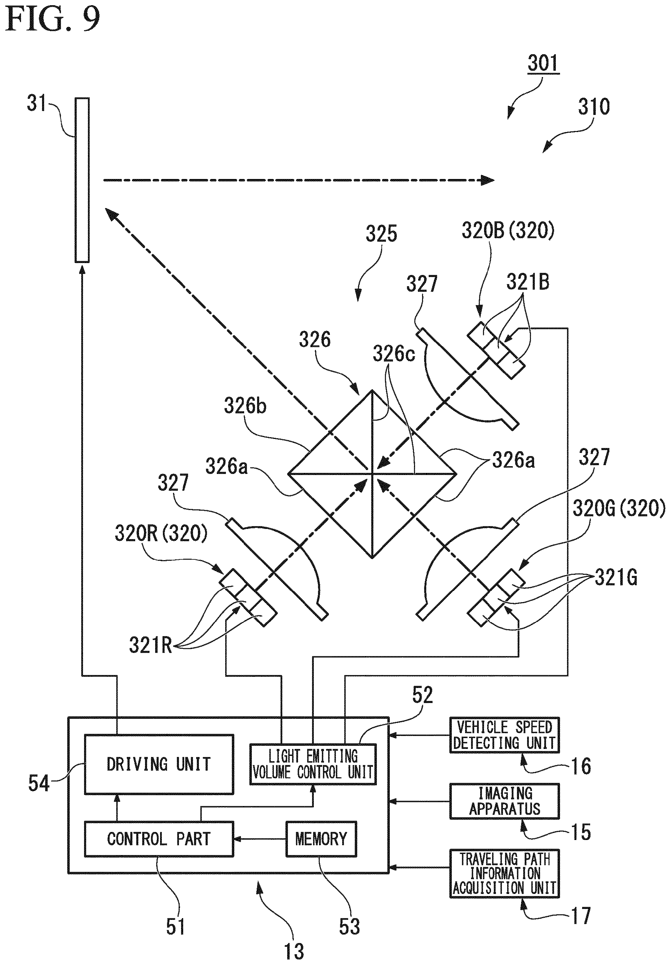

FIG. 9 is a schematic view showing a part of a road surface drawing system 301 of Variant 3. Further, the components of the same aspect as the above-mentioned embodiment are designated by the same reference numerals and description thereof will be omitted. The road surface drawing system 301 includes a projection module (a traveling path drawing unit) 310, the vehicle speed detecting unit 16, an imaging apparatus (a traveling path recognition unit) 15 and the control unit 13.

The projection module 310 of the variant has three light source units 320, an incident optical system 325 and the image generating unit 31 which are shown in FIG. 9, and the projecting optical system 41 not shown in FIG. 9 (omitted in FIG. 9).

The three light source units 320 are classified into a red light source unit 320R, a green light source unit 320G and a blue light source unit 320B. The red light source unit 320R has three red light sources 321R. The green light source unit 320G has three green light sources 321G. The blue light source unit 320B has three blue light sources 321B. Three light sources of the red light source unit 320R, the green light source unit 320G and the blue light source unit 320B are arranged in the upward/downward direction. In addition, the three light sources of the red light source unit 320R, the green light source unit 320G and the blue light source unit 320B form a plurality of light distribution regions arranged from the side near the vehicle to the side far from the vehicle on the road surface. That is, the three light sources of the red light source unit 320R, the green light source unit 320G and the blue light source unit 320B function as the first to third light sources 21A to 21C of the above-mentioned embodiment.

The red light source unit 320R, the green light source unit 320G and the blue light source unit 320B are connected to the light emitting volume control part 52. The light emitting volumes of the light sources of the red light source unit 320R, the green light source unit 320G and the blue light source unit 320B are controlled by the light emitting volume control part 52.

The incident optical system 325 has a photosynthetic apparatus 326 and three lens bodies 327. The photosynthetic apparatus 326 is a rectangular parallelepiped cross dichroic prism that is known in the related art. The photosynthetic apparatus 326 has three incidence surfaces 326a, one light emitting surface 326b and a pair of reflecting surfaces 326c. A wavelength selective reflection film is formed on the pair of reflecting surfaces 326c. The three incidence surfaces 326a face the red light source unit 320R, the green light source unit 320G and the blue light source unit 320B via the lens bodies 327, respectively. The photosynthetic apparatus 326 synthesizes red light, green light and blue light that enter from the incidence surfaces 326a and emit the synthesized light from the light emitting surface 326b as white light. The light emitted from the photosynthetic apparatus 326 enters the image generating unit 31.

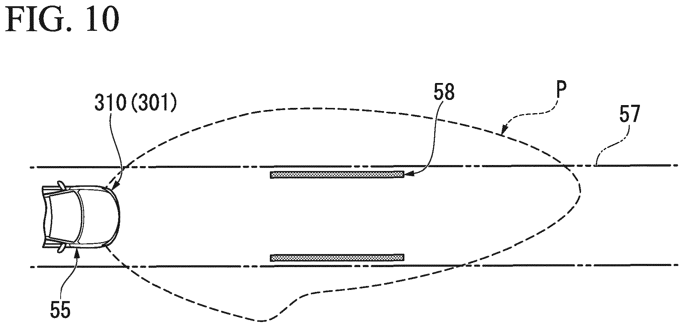

FIG. 10 is a schematic view showing an example of a light distribution pattern P and the predetermined image 58 formed by the road surface drawing system 301 of the variant.

Like the above-mentioned embodiment, the road surface drawing system 301 forms the light distribution pattern P as a headlight for a vehicle while displaying the image 58 that emphasizes a traveling path on the road surface 57.

As shown in FIG. 9, the image generating unit 31 and the plurality of light source units 320 are connected to the control unit 13. The image generating unit 31 is controlled by the control part 51 via the driving unit 54 in the control unit 13. In addition, as described above, the light sources of the light source units 320 are controlled by the control part 51 via the light emitting volume control part 52 in the control unit 13.

The image generating unit 31 switches a light distribution pattern generated state in which the light distribution pattern P as the headlight for a vehicle is generated and a traveling path emphasized state in which the image 58 that emphasizes the traveling path is generated, at a high speed through control by the control part 51. That is, the image generating unit 31 generates the light distribution pattern P at one moment and generates the image 58 at another moment by switching inclination states of the plurality of mirror elements at a high speed.

The three light source units 320 emit light and cause the light to enter the image generating unit 31 at a moment when the image generating unit 31 becomes the light distribution pattern generated state. In addition, one or two of the three light source units 320 emit light and the other light source unit 320 is turned off at a moment when the image generating unit 31 becomes the traveling path emphasized state. The light radiated from the plurality of light source units 320 passes through the photosynthetic apparatus 326 and enters the image generating unit 31. When the three light source units 320 emit light, the light radiated from the lights source units 320 are synthesized in the photosynthetic apparatus 326 to become white. Accordingly, here, white light enters the image generating unit 31. On the other hand, when one or two of the plurality of light source units 320 emit light, visible light having a different color from the white light enters the image generating unit 31. That is, the light source units 320 cause the white light to enter the image generating unit 31 in the light distribution pattern generated state and the visible light having a different color from the white light to enter the image generating unit 31 in the traveling path emphasized state. Accordingly, the road surface drawing system 301 displays the image 58 having a different color from the white light on the road surface 57 while forming the light distribution pattern P having white color on the road surface 57. Since the light distribution pattern generated state and the traveling path emphasized state are switched at a high speed, it is observed by a user that the light distribution pattern P and the image 58 on the road surface 57 are simultaneously displayed.

As an example, the case in which the image 58 that emphasizes the traveling path is displayed in red will be described.

In this case, the red light source unit 320R radiates red light regardless of a state of the image generating unit 31. Meanwhile, the green light source unit 320G and the blue light source unit 320B radiate green light and blue light at a moment when the image generating unit 31 becomes the light distribution pattern generated state, respectively, and are turned off at a moment when the image generating unit 31 becomes the traveling path emphasized state. Accordingly, the image 58 can be displayed in red on the road surface 57. In addition, as the light entering the image generating unit 31 in the traveling path emphasized state is switched to the green light source unit 320G and the blue light source unit 320B, a color scheme of the image 58 may be switched on the road surface 57.

According to the road surface drawing system 301 of the variant, the image 58 that prompts a warning notice of the traveling path to a driver can be displayed with visible light having a different color from the white light while forming the light distribution pattern P as the headlight for a vehicle using the white light. In addition, according to the road surface drawing system 301 of the variant, since the projection module 310 is also used as the headlight for a vehicle, the entire apparatus can be reduced in size in comparison with the case in which a drawing apparatus for displaying an image that emphasizes a traveling path and the headlight for a vehicle are individually installed.

Further, in the variant, since the road surface drawing system 301 has the red light source unit 320R, the green light source unit 320G and the blue light source unit 320B, the color scheme of the image 58 can be changed over time on the road surface 57. Accordingly, the image can be emphasized on the road surface 57, and an effect of prompting a warning notice to a driver can be enhanced.

The present invention is not limited to the previous embodiment, but is defined by the appended claims.

For example, while the example in which the reflection type digital light deflection apparatus is used as the image generating unit 31 has been described in the above-mentioned embodiment, the image generating unit may be a drawing apparatus or the like obtained by combining a transmissive spatial modulator such as a liquid crystal or the like, a scanning mirror and a fluorescent body.

### Second embodiment

Hereinafter, a lighting tool for a vehicle according to a second embodiment will be described with reference to the accompanying drawings.

For the convenience of easy understanding of features, in the drawings used in the following description, characteristic parts may be shown in an enlarged manner, and a dimensional ratio or the like of components may not be the same as that in actuality. In addition, in the embodiment, the same components as the embodiment are designated by the same reference numerals and description thereof will be simplified or omitted.

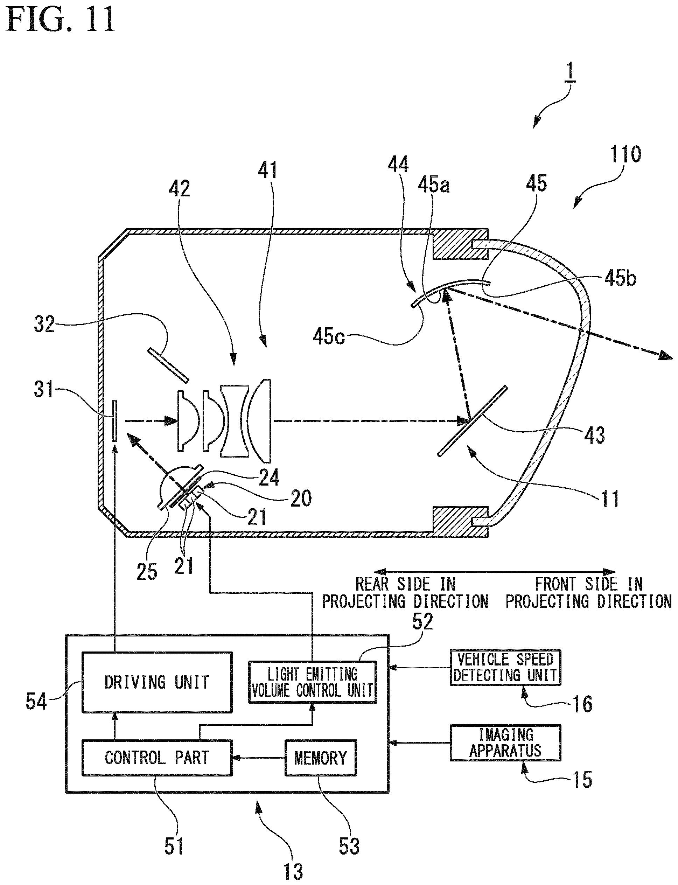

FIG. 11 is a schematic view of a lighting tool 110 for a vehicle according to the second embodiment. The lighting tool 110 for a vehicle of the embodiment is an apparatus for diagonally radiating light including an image from the vehicle toward a road surface. As shown in FIG. 11, the lighting tool 110 for a vehicle includes a projection module 11 that radiates a forward side of the vehicle with light and the control unit 13 configured to control the projection module 11.

In addition, in the lighting tool 110 for a vehicle, an imaging apparatus (a traveling path recognition unit) 15 configured to detect a situation in the front and transmit the detected situation to the control unit 13 and the vehicle speed detecting unit 16 configured to detect a speed of the vehicle are connected to configure the road surface drawing system 1. That is, the road surface drawing system 1 according to the embodiment has the lighting tool 110 for a vehicle, the imaging apparatus 15 and the vehicle speed detecting unit 16. First, the road surface drawing system 1 detects a speed of the vehicle using the vehicle speed detecting unit 16 while imaging an image in front of the vehicle using the imaging apparatus 15 installed in the front of the vehicle (for example, on the side of a front glass of a rearview mirror). Next, the control unit 13 analyzes image information acquired by the imaging apparatus 15 and controls the projection module 11 based on the information of the speed of the vehicle acquired by the vehicle speed detecting unit 16. Accordingly, a drawing (an image) 58 is displayed on the road surface 57 in front of the vehicle.

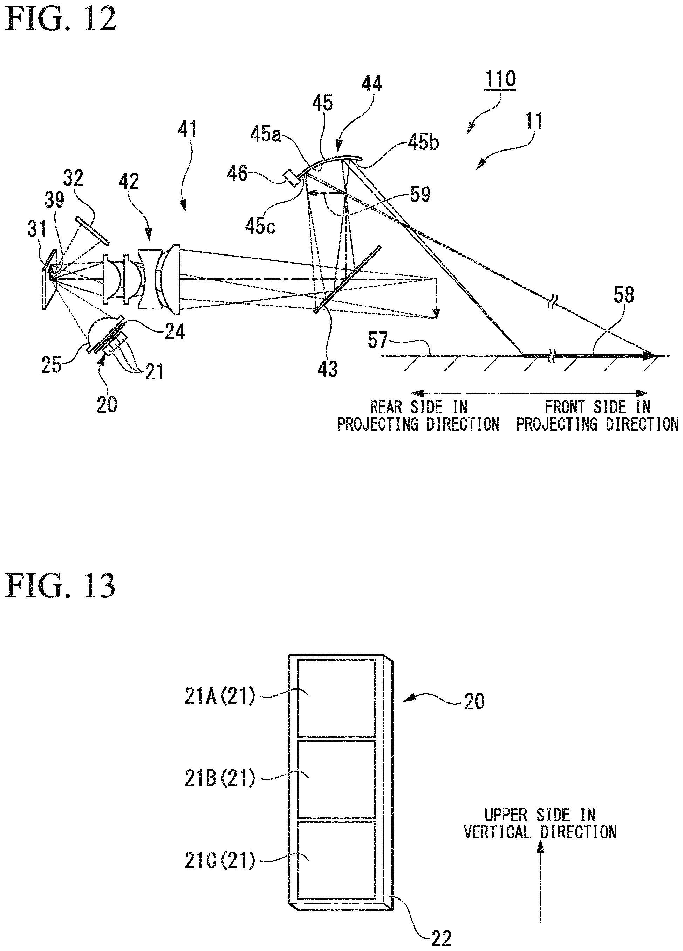

FIG. 12 is a schematic view showing the projection module 11 of the embodiment.

The projection module 11 of the embodiment includes the light source unit 20, the diffusion plate 24, the incident optical system 25, the image generating unit 31 and a projecting optical system (a projecting unit) 41.

The light source unit 20 is an array light source in which a plurality of light sources 21 are arranged to configure an array light emitting surface. That is, the light source unit 20 has the plurality of light sources 21. The light sources 21 emit visible light. A light emitting diode (LED) light source or a laser light source may be employed as the light source 21. The plurality of light sources 21 are individually turned on and off by a light emitting volume control part52, and thus a light emitting volume is controlled. That is, the light emitting volume of the light sources 21 can be adjusted from 100% at which the light emitting volume is maximized to 0%, which is a state in which the light sources 21 are completely turned off. The light sources 21 are in an off state when the light emitting volume is 0%.

FIG. 13 is a schematic view of the light source unit 20 of the embodiment. The light source unit 20 of the embodiment has the three light sources 21 and a package section 22 for a light source. In the embodiment, the three light sources 21 are arranged in an upward/downward direction (a vertical direction) of the vehicle. In addition, the three light sources 21 are contained in the package section 22 for a light source. A slight gap is formed between the neighboring light sources 21.

While the case in which the light source unit 20 has the three light sources 21 has been described in the embodiment, the number of the light sources 21 is not limited as long as the light source unit 20 has the plurality of light sources 21. In addition, while the plurality of light sources 21 of the light source unit 20 are arranged in the upward/downward direction in the embodiment, the light sources 21 may be arranged in a direction perpendicular to a widthwise direction of the vehicle. As the light sources 21 are arranged in this way, light distribution regions formed on a road surface by light emitted from the light sources 21 can be formed to be arranged in the forward/rearward direction of the vehicle. In addition, an array light source in which the plurality of light sources are arranged in vertical and horizontal directions may be employed as a variant of the light source unit. In this case, among the arranged light sources, the light radiated from the light sources arranged in one direction is arranged in the forward/rearward direction of the vehicle on the projected road surface.

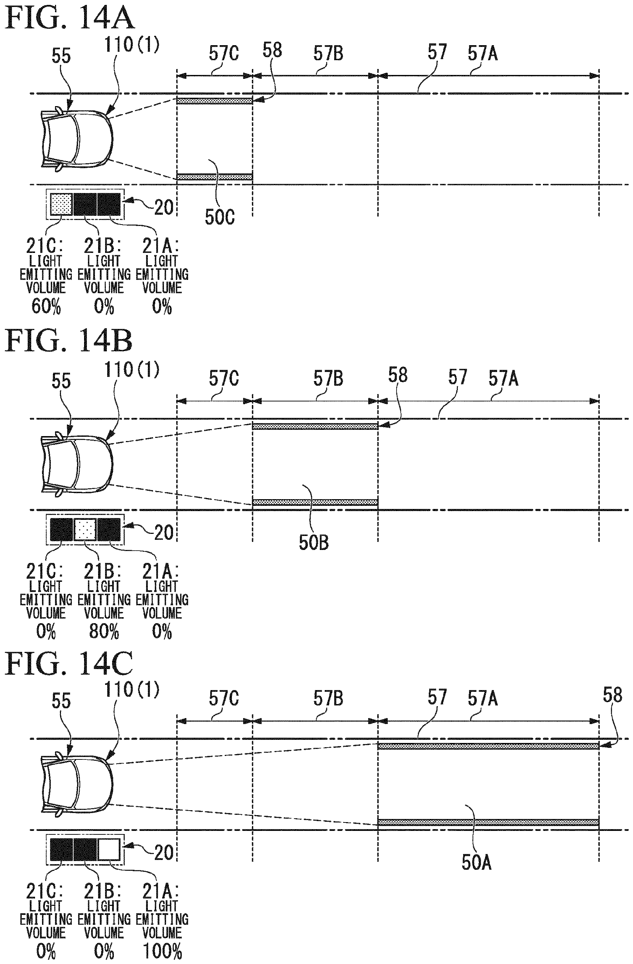

Among the three light sources 21 arranged in the upward/downward direction, the light source disposed at the uppermost side is a first light source 21A, the light source disposed at the lowermost side is a third light source 21C, and the light source disposed between the first light source 21A and the third light source 21C is a second light source 21B. In order to describe the light sources below based on FIG. 14A to FIG. 14C, the first light source 21A forms a light distribution region (a first light distribution region 50A) at a position on the road surface 57 farthest from a vehicle 55. The third light source 21C forms a light distribution region (a third light distribution region 50C) at a position on the road surface 57 nearest to the vehicle 55. In addition, the second light source 21B forms a light distribution region (a second light distribution region 50B) between those of the first light source 21A and the third light source 21C on the road surface 57. That is, the plurality of light sources 21 arranged in an arrangement direction perpendicular to the widthwise direction of the vehicle form a plurality of light distribution regions that are aligned on the road surface from a near side of the vehicle toward a far side of the vehicle, respectively.

The diffusion plate 24 is disposed between the light source unit 20 and the incident optical system 25. The diffusion plate 24 allows diffusion and transmission of the entering light. The light emitted from the light source unit 20 and passing through the diffusion plate 24 enters the incident optical system 25 in a state in which a light diameter is enlarged.

In addition, when a light source configured to emit light other than white light is used as the light source 21, a fluorescent body plate configured to receive light radiated from the light sources 21 and radiate white light having diffusibility may be used as the diffusion plate 24. As an example, when the light sources 21 radiate blue light (that may include ultraviolet light), the blue light that enters the fluorescent body plate (the diffusion plate 24) including fluorescent body particles therein passes through the fluorescent body plate while being diffused therein, and a wavelength of some of the blue light is converted by the fluorescent body particles. The blue light emitted from the light sources 21 and the yellow light discharged by excitation of the fluorescent body particles are mixed, and as a result, the white light having diffusibility is radiated from the fluorescent body plate. Further, a dispersing agent that diffuses blue light in the fluorescent body plate may be added to the fluorescent body plate.

As described above, in the light source unit 20, a slight gap is formed between the neighboring light sources 21 (see FIG. 13). When the light radiated from the light sources 21 is projected to the road surface, the gap between the light sources 21 may cause formation of a dark section in the drawing 58 on the road surface 57. According to the embodiment, as the diffusion plate 24 is disposed between the light source unit 20 and the incident optical system 25, the light radiated from the light source unit 20 can be blurred and enter the incident optical system 25, and formation of the dark section in the drawing 58 on the road surface 57 can be minimized.

As shown in FIG. 12, the incident optical system 25 condenses light from the light sources 21 and irradiates the reflection control surface of the image generating unit 31 with the light. The incident optical system 25 is constituted by one or a plurality of lenses, or the like.

The image generating unit 31 modulates the light emitted from the light sources 21 and generates an image. In the embodiment, the image generating unit 31 is constituted by a reflection type digital light deflection apparatus (a digital mirror device (DMD)). The image generating unit 31 constituted by the reflection type digital light deflection apparatus has a reflection control surface configured by arranging a plurality of tiltable mirror elements.

In the plurality of mirror elements of the image generating unit 31, each tilting angle is controlled toward a reflection side or a light shielding side according to a signal from the control unit 13. The image generating unit 31 generates a reflection pattern (an image) 39 having an arbitrary shape using the reflected light of the plurality of mirror elements that are tilted toward the reflection side. In the example shown in FIG. 12, the image generating unit 31 generates a reflection pattern 39 of an arrow shape.

Further, a light shielding member 32 configured to shield light from the mirror elements that are tilted toward the light shielding side is installed on the lighting tool 110 for a vehicle.

The projecting optical system 41 radiates the reflection pattern 39 generated in the image generating unit 31 to the front of the vehicle as the drawing 58 and projects the reflection pattern 39 on the road surface 57. The projecting optical system 41 includes a light condensing optical system 42, a return mirror 43 and a reflecting apparatus 44.

The projecting optical system 41 radiates the image 58 in the plurality of light distribution regions.

The light condensing optical system 42 is constituted by one or a plurality of lenses, or the like. The light condensing optical system 42 radiates the reflection pattern 39 generated by the image generating unit 31 to a reflecting section 45 of the reflecting apparatus 44 via the return mirror 43. In addition, the light condensing optical system 42 condenses the reflection pattern 39 emitted from the image generating unit 31 and images an intermediate image 59.

The return mirror 43 is a mirror configured to reflect the light from the light condensing optical system 42 toward the reflecting section 45.

The reflecting apparatus 44 has the reflecting section 45. The reflecting section 45 reflects the light condensed by the light condensing optical system 42 toward the road surface 57. The reflecting section 45 is a concave surface reflector for enlargement projection. The reflecting section 45 has a reflecting surface 45a. That is, the projecting optical system 41 has the reflecting surface 45a. The reflecting section 45 reflects the light condensed by the light condensing optical system 42 in the reflecting surface 45a and projects the reflected light to a predetermined region of the road surface 57. The reflecting surface 45a is a concave surface shape constituted by a non-spherical free curved surface.

The reflecting surface 45a is disposed downstream from the intermediate image 59 formed by the light condensing optical system 42. Accordingly, the light is imaged upstream from the reflecting surface 45a, enters the reflecting surface 45a having a concave surface shape while spreading in the diffusion direction, and is condensed again by being reflected by the reflecting surface 45a.

Further, in the description, "upstream" and "downstream" refer to a sequential relation along a transmittance path of light (i.e., an upstream side and a downstream side in an optical path), and do not refer to disposition of areas in the lighting tool 110 for a vehicle.

A region 45b in front of the reflecting surface 45a in a projecting direction reflects light toward the road surface 57 on the side near the vehicle. In addition, a region 45c in rear of the reflecting surface 45a in the projecting direction reflects light toward the road surface 57 on the side far from the vehicle. The reflecting surface 45a is formed by continuously varying a curvature according to a distance from a projecting target (from the side near the vehicle to the side far from the vehicle on the road surface 57) from the region 45c on the rear side in the projecting direction toward the region 45b on the front side in the projecting direction. That is, the reflecting surface 45a has a curvature that is gradually increased from the rear side in the projecting direction toward the front side in the projecting direction. Accordingly, in comparison with the region 45c on the rear side in the projecting direction in which the light is reflected toward the side far from the vehicle, the light is reflected by the region 45b on the front side in the projecting direction in which the light is reflected toward the side near the vehicle, a distance between a region in which light is reflected by the reflecting surface 45a and a region in which an image is formed on the road surface 57 that is an image plane of the road surface 57 can be reduced, and out of focus of the imaged drawing 58 can be minimized.

According to the embodiment, the reflecting section 45 configured to reflect the light including the image as the drawing 28 toward the road surface 57 is formed by continuously varying a curvature according to a distance from a projecting target (from the side near the vehicle to the side far from the vehicle on the road surface). Accordingly, the image can be clearly displayed on the road surface 57, and the drawing 58 having high quality in which areas that are out of focus do not occur can be formed.

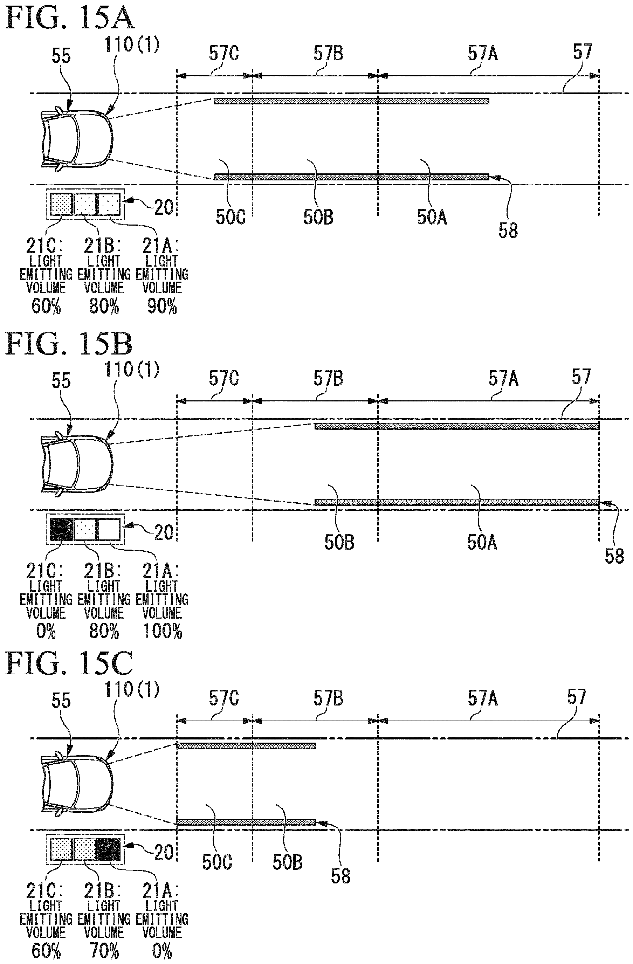

Next, the drawing 58 formed by the lighting tool 110 for a vehicle will be described with reference to FIG. 14A to FIG. 14C and FIG. 15A to FIG. 15C.

As shown in FIG. 14A to FIG. 14C and FIG. 15A to FIG. 15C, the road surface drawing system 1 including the lighting tool 110 for a vehicle is mounted on the vehicle 55, and radiates light from the vehicle 55 toward the road surface 57. In addition, the road surface drawing system 1 performs predetermined drawing that emphasizes a traveling path of the vehicle 55 on the road surface 57 in front of the vehicle 55. In the embodiment, the road surface drawing system 1 draws a pair of rod-shaped lanes extending in the traveling direction of the vehicle 55 as the predetermined drawing 58 that emphasizes the traveling path. The pair of rod-shaped lanes are disposed to be slightly wider than a vehicle width of the vehicle 55. The pair of rod-shaped lanes play a role of assisting visual recognition of a driver by curving the lanes or changing a color scheme according to a variation of the traveling path acquired by the imaging apparatus 15.

FIG. 14A to FIG. 14C are views showing examples of the drawing 58 displayed on the road surface 57 when light is emitted from only the third light source 21C, the second light source 21B and the first light source 21A, respectively. A first road surface region 57A, a second road surface region 57B and a third road surface region 57C that are sequentially arranged from a region far from the vehicle 55 toward a region near the vehicle 55 are set on the road surface 57 in front of the vehicle 55. The first to third light sources 21A to 21C form the first to third light distribution regions 50A to 50C in the first to third road surface regions 57A to 57C on the road surface 57. The road surface drawing system 1 displays the drawing 58 on the first to third road surface regions 57A to 57C at display positions of the drawing 58 by controlling light emitting volumes of the first to third light sources 21A to 21C.

FIG. 14A is a view showing the drawing 58 when the third light source 21C is lit up and the first light source 21A and the second light source 21B are turned off. Specifically, FIG. 14A is a view showing an example of the drawing 58 drawn on the road surface 57 when a light emitting volume of the third light source 21C is set to 60% and light emitting volumes of the second light source 21B and the first light source 21A are set to 0%. The light radiated from the first light source 21A forms a reflected image as the light is reflected in the image generating unit 31, and further forms the drawing 58 in the first light distribution region 50A on the road surface 57.

When the vehicle 55 travels at a relatively low speed (for example 30 km/hour), the drawing 58 is preferably displayed on the third road surface region 57C only as shown in FIG. 14A. This is because necessity to display the drawing on the distant region is low since a driver's attention is directed to the side near the vehicle 55 when the vehicle 55 travels at a low speed. In addition, this is because the drawing 58 could interfere with operation by a driver of another vehicle since a vehicle-to-vehicle distance with respect to other vehicles that travel in front of the vehicle 55 is small when the vehicle 55 travels at a low speed. According to the embodiment, when the drawing 58 is displayed only on a region of the road surface 57 in the vicinity of the vehicle 55 (i.e., the third road surface region 57C), the other light sources (the first and second light sources 21A and 21B) that handle the other regions (the first and second road surface regions 57A and 57B) can be turned off, and the road surface drawing system 1 having high energy efficiency can be realized.

FIG. 14B is a view showing the drawing 58 when the second light source 21B is lit up and the first light source 21A and the third light source 21C are turned off. Specifically, FIG. 14B is a view showing an example of the drawing 58 drawn on the road surface 57 when a light emitting volume of the second light source 21B is set to 80% and light emitting volumes of the first light source 21A and the third light source 21C are set to 0%. The light radiated from the second light source 21B forms a reflected image as the light is reflected in the image generating unit 31, and further forms the drawing 58 in the second light distribution region 50B on the road surface 57.

When the vehicle 55 travels at a medium speed (for example, 60 km/hour), as shown in FIG. 14B, the drawing 58 is preferably displayed only on a region spaced a certain distance from the vehicle 55 of the road surface 57 (i.e., the second road surface region 57B). According to the embodiment, when the drawing 58 is displayed only on the second road surface region 57B, the first and third light sources 21A and 21C can be turned off, and the road surface drawing system 1 having high energy efficiency can be realized.

FIG. 14C is a view showing the drawing 58 when the first light source 21A is lit up and the second light source 21B and the third light source 21C are turned off. Specifically, FIG. 14C is a view showing an example of the image 58 drawn on the road surface 57 when a light emitting volume of the first light source 21A is set to 100% and light emitting volumes of the second light source 21B and the third light source 21C are set to 0%. The light radiated from the third light source 21C forms a reflected image as the light is reflected in the image generating unit 31, and further the drawing 58 is formed in the third light distribution region 50C on the road surface 57.

When the vehicle 55 travels at a high speed (for example, 100 km/hour), as shown in FIG. 4C, the drawing 58 is preferably displayed only on the region of the road surface 57 farthest from the vehicle 55 (i.e., the first road surface region 57A). This is because necessity to display a drawing on the near region is low since a driver's attention is directed to a far side of the vehicle 55 when the vehicle 55 travels at a high speed. According to the embodiment, when the drawing 58 is displayed only on the first road surface region 57A, the second and third light sources 21B and 21C can be turned off, and the road surface drawing system 1 having high energy efficiency can be realized.

As shown in FIG. 14A to FIG. 14C, a display length of the drawing 58 is preferably increased in the traveling direction of the vehicle 55 while varying a display position of the drawing 58 as a speed of the vehicle 55 is increased. Further, the display length of the drawing 58 in the traveling direction of the vehicle 55 can be easily varied by adjusting a shape of a reflected image formed in the image generating unit 31. Accordingly, a range of the drawing 58 that is visually recognized by a driver in the vehicle 55 can be sufficiently widened as the speed of the vehicle 55 is increased.

Further, in FIG. 14A to FIG. 14C, a display length of the drawing 58 in the traveling direction of the vehicle 55 is schematically displayed and different from an actual length.

In the road surface drawing system 1, since the light is radiated diagonally from a certain height of the vehicle 55 toward the road surface, a luminous density of the light entering the road surface is decreased as a distance from the vehicle 55 is increased. Accordingly, when uniform light is radiated from the road surface drawing system 1 to the road surface 57, an illuminance of the drawing 58 on the road surface 57 is decreased when displayed at a position separated from the vehicle 55. In the embodiment, light emitting volumes of the first to third light sources 21A to 21C are individually controlled by the light emitting volume control part 52. More specifically, a light emitting volume of the third light source 21C is set to 60% when the third road surface region 57C is irradiated with light, a light emitting volume of the second light source 21B is set to 80% when the second road surface region 57B is irradiated with light, and a light emitting volume of the first light source 21A is set to 100% when the first road surface region 57A is irradiated with light. That is, the light emitting volumes of the light sources (the first to third light sources 21A to 21C) can be adjusted according to distances of the formed light distribution regions (the first to third light distribution regions 50A to 50C) from the vehicle 55. Accordingly, even when the light sources 21 are switched to vary a position of the drawing 58, brightness of the drawing 58 on the road surface can be constantly maintained. In addition, according to the embodiment, as the light emitting volumes of the light sources 21 are adjusted and a configuration in which brightness of the drawing 58 is constantly maintained according to a variation of the display position is employed, the road surface drawing system 1 having high energy efficiency can be realized.

Further, the image generating unit 31 can drive ON and OFF of reflection by inclinations of mirror elements and adjust a duty ratio of ON and OFF. In the embodiment, the duty ratio of the image generating unit 31 may be adjusted and an illuminance in a single light distribution region may be adjusted according to the distance from the vehicle 55. In this case, as the region gets closer to the vehicle 55, a time in which the adjusted duty ratio is turned OFF is increased.

FIG. 15A is a view showing the drawing 58 when the drawing 58 is displayed throughout the first to third road surface regions 57A to 57C. In FIG. 15A, the first to third light sources 21A to 21C emit light. The light radiated from the first to third light sources 21A to 21C forms the drawing 58 in the first to third light distribution regions 50A to 50C on the road surface 57. In the state shown in FIG. 15A, a light emitting volume of the first light source 21A corresponding to the first light distribution region 50A is 90%, a light emitting volume of the second light source 21B corresponding to the second light distribution region 50B is 80%, and a light emitting volume of the third light source 21C corresponding to the third light distribution region 50C is 60%.

Further, each of the light emitting volumes of the light sources are adjusted with reference to a light emitting volume at which a light emitting volume of the light source is sufficiently obtained even at a farthest portion from the vehicle among the respective corresponding road surface regions.

FIG. 15B is a view showing the drawing 58 when the drawing 58 is displayed throughout the first and second road surface regions 57A and 57B. In FIG. 15B, the first and second light sources 21A and 21B emit light. The light radiated from the first and second light sources 21A and 21B forms the drawing 58 in the first and second light distribution regions 50A and 50B on the road surface 57. In the state shown in FIG. 15B, a light emitting volume of the first light source 21A corresponding to the first light distribution region 50A is 100%, a light emitting volume of the second light source 21B corresponding to the second light distribution region 50B is 80%, and the third light source 21C corresponding to the third light distribution region 50C is turned off.

FIG. 15C is a view showing the drawing 58 when the drawing 58 is displayed throughout the second and third road surface regions 57B and 57C. In FIG. 15C, the second and third light sources 21B and 21C emit light. The light radiated from the second and third light sources 21B and 21C forms the drawing 58 in the second and third light distribution regions 50B and 50C on the road surface 57. In the state shown in FIG. 15C, the first light source 21A corresponding to the first light distribution region 50A is turned off, a light emitting volume of the second light source 21B corresponding to the second light distribution region 50B is 70%, and a light emitting volume of the third light source 21C corresponding to the third light distribution region 50C is 60%.

According to the embodiment, as shown in FIG. 15A to FIG. 15C, as the light emitting volumes of the light sources (the first to third light sources 21A to 21C) are adjusted according to the distance of the formed light distribution regions (the first to third light distribution regions 50A to 50C) from the vehicle 55, uniformity of the illuminance on the road surface in the drawing 58 extending throughout a plurality of road surface regions can be increased.

Brightness in the vicinity of a boundary between the light distribution regions on the sides having a high light emitting volume (i.e., far sides) in the drawing 58 that bridges a pair of neighboring light distribution regions may be adjusted by adjusting a duty ratio of the image generating unit 31 in the embodiment. In this case, a difference of the illuminance on the road surface 57 may be reduced and the natural drawing 58 may be realized in the vicinity of the boundary between the pair of light distribution regions.

Returning to FIG. 11, a configuration of the road surface drawing system 1 of the present embodiment will be described.

The imaging apparatus 15 functions as a traveling path recognition unit configured to recognize a traveling path in front of the vehicle by imaging and processing a forward side of the vehicle. The vehicle speed detecting unit 16 detects a speed of the vehicle. The vehicle speed detecting unit 16 is configured to directly acquire vehicle speed information from the vehicle. Information of a traveling path and a vehicle speed acquired by the imaging apparatus 15 and the vehicle speed detecting unit 16 is transmitted to a control part 51 of the control unit 13 as an electrical signal.

The control unit 13 has a memory 53 in which control information or the like of various images is previously set, the control part 51 configured to generate a control signal on the basis of electrical signals from the memory 53, the imaging apparatus 15 and the vehicle speed detecting unit 16, a driving unit 54 configured to drive the image generating unit 31 on the basis of the control signal, and the light emitting volume control part 52 configured to individually change light emitting volumes of the plurality of light sources 21. The control unit 13 generates an image by performing processing of controlling tilting states of the mirror elements of the image generating unit 31. In addition, the control unit 13 determines a position at which the drawing 58 is displayed on the road surface 57 based on information of a speed of the vehicle 55 acquired by the vehicle speed detecting unit 16, and adjusts the light emitting volumes of the plurality of light sources 21 using the light emitting volume control part 52.

### (Conclusion)

According to the embodiment, the plurality of light sources 21 corresponding to the plurality of light distribution regions (the first to third light distribution regions 50A to 50C) arranged from the side near the vehicle 55 toward the side far from the vehicle 55 are installed in the lighting tool 110 for a vehicle. In addition, the light emitting volumes of the plurality of light sources 21 are controlled by the light emitting volume control part 52.

Accordingly, the illuminance on the road surface 57 can be adjusted at each of the plurality of light distribution regions formed on the road surface 57, and the illuminance on the road surface 57 of the side near the vehicle 55 and the side far from the vehicle 55 can be substantially uniform. More specifically, the light emitting volume control part 52 preferably performs control of causing the light emitting volume of the light source 21 that forms a light distribution region at the far side of the vehicle 55 among the plurality of light sources 21 to be larger than the light emitting volume of the light source 21 that forms a light distribution region at the near side of the vehicle 55. Accordingly, the light emitting volume of the light source 21 that illuminates the light distribution region located at the far side from the vehicle 55, among the plurality of light distribution regions formed on the road surface 57, can be increased, and the illuminance in the drawing 58 can be substantially uniform.

According to the embodiment, the reflecting surface 45a of the projecting optical system 41 has a configuration in which a curvature is gradually increased from a rear side in the projecting direction toward a front side in the projecting direction. Accordingly, as described above, it is possible to provide a lighting tool for a vehicle capable of minimizing out of focus of an image and clearly displaying an image on a road surface.

The road surface drawing system 1 of the embodiment includes the lighting tool 110 for a vehicle, and the imaging apparatus 15 configured to recognize a traveling path in front of the vehicle. The road surface drawing system 1 makes the lighting tool 110 for a vehicle to perform a drawing that emphasizes the traveling path on the road surface 57 based on the recognized result acquired by the imaging apparatus 15.

Accordingly, the road surface drawing system 1 can assist a driver's driving and increase safety.

### (Variant 4)

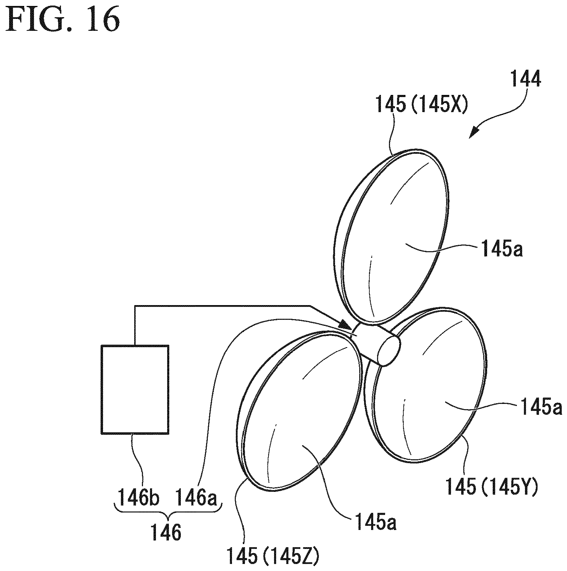

Next, a reflecting apparatus 144 of a variant that can be employed instead of the above-mentioned reflecting apparatus 44 will be described with reference to FIG. 16. Further, the same components as those of the above-mentioned embodiment are designated by the same reference numerals and description thereof will be omitted.

As shown in FIG. 16, the reflecting apparatus 144 of the variant has a plurality of (in the embodiment, three) reflecting sections 145, and a switching unit 146. The reflecting sections 145 reflect the light condensed by the light condensing optical system 42 toward the road surface 57. The switching unit 146 has a shaft section 146a, and a driving unit 146b configured to rotate and drive the shaft section 146a about a shaft thereof. The plurality of reflecting sections 145 are fixed to the shaft section 146a at equal intervals in the circumferential direction with respect to an axial center of the shaft section 146a. The switching unit 146 is disposed to switch one of the plurality of reflecting sections 145 to a light receiving position at which light radiated from the light condensing optical system 42 is received according to rotation of the shaft section 146a by the driving unit 146b.

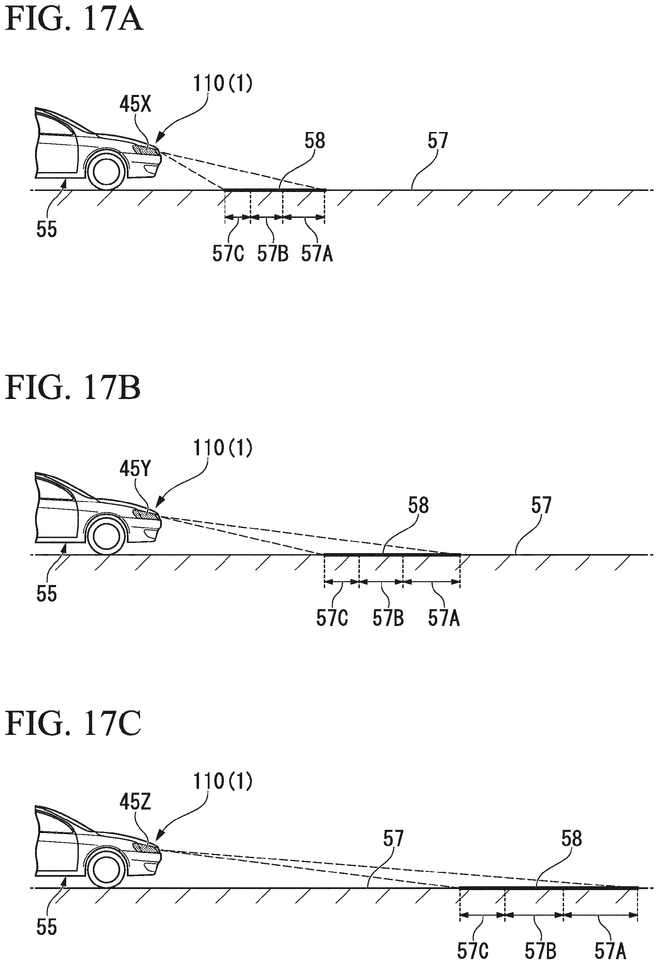

The reflecting apparatus 144 has a reflecting section 145X for a short range, a reflecting section 145Y for an intermediate range, and a reflecting section 145Z for a long range. Reflecting surfaces 145a of the reflecting sections 145X, 145Y and 145Z are set to reflect light toward the regions on the road surface 57 having different distances. The reflecting surfaces 145a of the reflecting section 145X for a short range, the reflecting section 145Y for an intermediate range and the reflecting section 145Z for a long range are formed to have curved surfaces having a larger average curvature as a reflected light is radiated closer. A state in which the drawing 58 is displayed on the road surface 57 using the reflecting section 145X for a short range is shown in FIG. 17A, a state in which the drawing 58 is displayed on the road surface 57 using the reflecting section 145Y for an intermediate range is shown in FIG. 17B, and a state in which the drawing 58 is displayed on the road surface 57 using the reflecting section 145Z for a long range is shown in FIG. 17C. As shown in FIG. 17A to FIG. 17C, regions on the road surface 57 that can be radiated by the reflecting sections 145X, 145Y and 145Z are different from each other. In addition, regions on the road surface 57 that can be radiated by the reflecting sections 145X, 145Y and 145Z are partitioned into the first to third road surface regions 57A to 57C corresponding to the first to third light sources 21A to 21C, respectively.

According to the variant, the plurality of reflecting sections 145 configured to reflect light toward the regions having different distances can be disposed at light receiving positions by being switched by switching unit 146. It is possible to provide the lighting tool 110 for a vehicle configured to clearly display an image on a position appropriate for each use by switching the reflecting sections 145 according to uses. In addition, when the reflected light is radiated to a long range, diffusion of the light and a decrease in illuminance can be suppressed.

In addition, the variant can exhibit the same effect as the above-mentioned embodiment. That is, outputs of the light sources corresponding to the plurality of road surface regions (the first to third road surface regions 57A to 57C) partitioned on the road surface 57 can be adjusted, and the illuminance of the road surface 57 on the side near the vehicle 55 and the side far from the vehicle 55 can be substantially uniform. In addition, like the above-mentioned embodiment, a duty ratio of the image generating unit 31 can be adjusted, and the illuminance in the light distribution region can be adjusted according to the distance from the vehicle 55.

### (Variant 5)

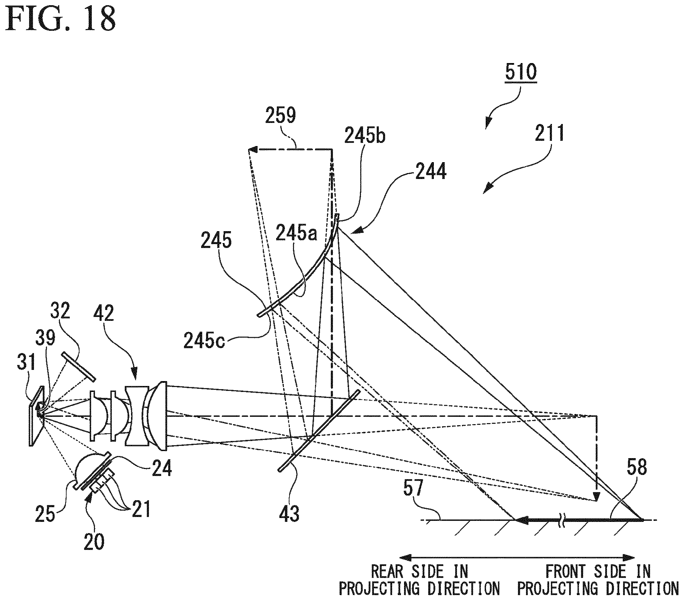

FIG. 18 is a schematic view showing a projection module 211 of a lighting tool 510 for a vehicle of Variant 5. Further, the components of the same aspect as the above-mentioned embodiment are designated by the same reference numerals and description thereof will be omitted.

The lighting tool 510 for a vehicle of the variant includes a reflecting apparatus 244 having a reflecting section 245.

The reflecting section 245 has a reflecting surface 245a formed in a convex surface shape. The reflecting surface 245a is disposed upstream from an intermediate image 259 formed by the light condensing optical system 42. Accordingly, light enters the reflecting surface 245a having the convex surface shape while being condensed, and enters the front side by adjusting a distance between a reflecting surface and an image plane using the reflecting surface 245a.

The reflecting surface 245a having the convex surface shape has a curvature that is gradually increased from the rear side in the projecting direction toward the front side in the projecting direction.

A region 245b in front of the reflecting surface 245a in the projecting direction reflects light toward the road surface 57 on the side far from the vehicle. In addition, a region 245c at rear of the reflecting surface 245a in the projecting direction reflects light toward the road surface 57 on the side near the vehicle. From the region 245c on the rear side in the projecting direction toward the region 245b on the front side in the projecting direction, the reflecting surface 245a is formed by continuously varying a curvature according to a distance from a projecting target (from the side near the vehicle to the side far from the vehicle on the road surface 57). That is, the reflecting surface 245a has a curvature that is gradually increased from the rear side in the projecting direction toward the front side in the projecting direction. Accordingly, in comparison with the region 245b on the front side in the projecting direction in which light is reflected toward the side far from the vehicle, the light can be reflected by the region 245c on the rear side in the projecting direction in which light is reflected toward the side near the vehicle, a distance between the region in which light is reflected by the reflecting surface 245a and the region in which an image is imaged on the road surface 57, which is an image plane, can be reduced, and out of focus of the imaged drawing 58 can be minimized The present invention is not limited to the embodiment, but defined by the appended claims.

For example, the lighting tool 110 or 510 for a vehicle may be separately installed or may be combined with the headlight. In addition, while the example in which the reflection type digital light deflection apparatus is used as the image generating unit 31 has been described in the above-mentioned embodiment, the image generating unit may be a drawing apparatus or the like obtained by combining a transmissive spatial modulator such as a liquid crystal or the like, a scanning mirror and a fluorescent body.

## Claims

1. A road surface drawing system (1, 301) mounted on a vehicle and configured to draw a predetermined image (58) on a road surface (57) in front of the vehicle, the road surface drawing system comprising:
a traveling path drawing unit (10, 11, 210, 310) configured to radiate light and draw the image on the road surface;
a vehicle speed detecting unit (16) configured to detect a speed of the vehicle; and
a control unit (13) configured to control the traveling path drawing unit (10, 11, 210,310),
wherein the traveling path drawing unit (10, 11, 210, 310) has a light source unit (20, 320, 320R, 320G, 320B) that includes a plurality of light sources (21, 321R, 321G, 321B), an image generating unit (31) configured to modulate light emitted from the light source unit (20, 320, 320R, 320G, 320B) and to form the image (58), and a projecting unit (41) configured to project the light including the image (58) to the road surface (57),
wherein the control unit (13) includes a light emitting volume control part (52) configured to individually vary light emitting volumes of the plurality of light sources (21, 321R, 321G, 321B),
wherein the plurality of light sources (21, 321R, 321G, 321B) forms a plurality of light distribution regions (50A, 50B, 50C), respectively, the plurality of light distribution regions (50A, 50B, 50C) being aligned on the road surface (57) from a near side of the vehicle toward a far side of the vehicle,
wherein the control unit (13) is configured to determine a position of a light distribution region among the plurality of light distribution regions (50A, 50B, 50C) at which the image (58) is drawn and to switch a light emitting state of at least one of the light sources (21, 321R, 321G, 321B) by individually controlling a light emitting volume of the plurality of light sources (21, 321R, 321G, 321B) with the light emitting volume control part (52) on the basis of the detection result of the vehicle speed detecting unit (16),
wherein the light emitting volume control part (52) is configured to change a distance between the image (58) and the vehicle by controlling a light emitting volume of a light source that forms a light distribution region at the far side of the vehicle among the plurality of light sources to be larger than a light emitting volume of a light source that forms a light distribution region at the near side of the vehicle.
wherein the plurality of light distribution regions (50A, 50B, 50C) consists of a first light distribution region (50A), a second light distribution region (50B) and a third light distribution region (50C) that are sequentially arranged from a region far from the vehicle toward a region near the vehicle,
wherein the plurality of light sources (21) includes a first light source (21A), a second light source (21B) and a third light source (21C) that correspond to the first light distribution region (50A), the second light distribution region (50B) and the third light distribution region (50C), respectively,
wherein the control unit (13) is configured to turn on the third light source (21C) that forms the third light distribution region (50C) and to turn off the first light source (21A) and the second light source (21B) when the vehicle travels at low speed, to turn on the second light source (2IB) that forms the second light distribution region (50B) and to turn off the first light source (21A) and the third light source (21C) when the vehicle travels at medium speed, and to turn on the first light source (21A) that forms the first light distribution region (50A) and to turn off the second light source (21B) and the third light source (21C) when the vehicle travels at high speed, and
wherein a length of each of the light distribution regions (50A, 50B, 50C) is increased in a traveling direction of the vehicle as the speed of the vehicle is increased.

2. The road surface drawing system according to claim 1,
wherein the control unit (13) is configured to switch the light emitting state of at least one of the light sources from an ON-state to an OFF-state on the basis of the detection result of the vehicle speed detecting unit (16).

3. The road surface drawing system according to claim 1 or 2,
wherein the projecting unit (41) includes a light condensing optical system (42) configured to condense the light including the image generated by the image generating unit (31) and to cause the light to enter the projecting unit (41), and a reflecting surface (45a, 145a, 245a) configured to reflect the light condensed by the light condensing optical system (42) and project the reflected light to the road surface (57), and
the reflecting surface (45a, 145a, 245a) has a curvature that is gradually increased from a rear side in a projecting direction toward a front side in the projecting direction.

4. The road surface drawing system according to claim 3,
wherein the projecting unit (41) includes a plurality of reflecting surfaces (45a, 145a, 245a) configured to project light to regions having different distances from the vehicle, respectively, and a switching unit (146) configured to select and switch the reflecting surface to any one of the plurality of reflecting surfaces.

5. The road surface drawing system according to any one of claims 1 to 4,
wherein the traveling path drawing unit (10, 11, 210, 310) is configured to form a light distribution pattern (P) as a headlight for a vehicle while displaying the image (58) that emphasizes the traveling path on the road surface (57).

6. The road surface drawing system according to claim 5,
wherein the image generating unit (31) is configured to switch a light distribution pattern generated state in which a light distribution pattern is generated as the headlight for a vehicle and a traveling path emphasized state in which the image that emphasizes the traveling path is generated, at a high speed, and
the light source unit (20, 320, 320R, 320G, 320B) is configured to cause white light to enter the image generating unit (31) in the light distribution pattern generated state and to cause visible light having a color different from the white light to enter the image generating unit (31) in the traveling path emphasized state.

7. The road surface drawing system according to any one of claims 1 to 6, comprising a traveling path recognition unit (15) configured to detect road conditions in front of the vehicle,
wherein the control unit (13) is configured to reflect the recognized result of the traveling path recognition unit (15) to the image (58).

8. The road surface drawing system according to any one of claims 1 to 7, comprising a traveling path information acquisition unit (17) configured to acquire road conditions in front of the vehicle from outside,
wherein the control unit (13) is configured to reflect information acquired by the traveling path information acquisition unit (17) to the image (58).

9. A method of drawing an image that emphasizes a traveling path of a vehicle on a road surface in front of the vehicle, the method comprising:
drawing the traveling path by drawing the image on the road surface by radiating light onto the road surface; and
detecting a speed of the vehicle;
wherein the drawing of the traveling path includes a step of individually controlling a light emitting volume of a plurality of light sources, a step of modulating the radiated light from a plurality of light sources and forming the image in a plurality of light distribution regions with the radiated light from the plurality of light sources, respectively, and a step of projecting a light including the image to the road surface, the plurality of light distribution regions being aligned on the road surface from a near side of the vehicle toward a far side of the vehicle,
wherein, on the basis of a detection result of the detected vehicle speed, a position of a light distribution region among the plurality of light distribution regions at which the image is drawn is determined and the light emitting volume of the plurality of light sources are individually controlled,
wherein a distance between the image and the vehicle is changed by controlling a light emitting volume of a light source that forms a light distribution region at the far side of the vehicle among the plurality of light sources to be larger than a light emitting volume of a light source that forms a light distribution region at the near side of the vehicle,
wherein the plurality of light distribution regions (50A, 50B, 50C) consists of a first light distribution region (50A), a second light distribution region (50B) and a third light distribution region (50C) that are sequentially arranged from a region far from the vehicle toward a region near the vehicle,
wherein the plurality of light sources (21) includes a first light source (21A), a second light source (21B) and a third light source (21C) that correspond to the first light distribution region (50A), the second light distribution region (50B) and the third light distribution region (50C), respectively,
wherein the third light source (21C) that forms the third light distribution region (50C) is turned on and the first light source (21A) and the second light source (21B) are turned off when the vehicle travels at low speed,
wherein the second light source (21B) that forms the second light distribution region (50B) is turned on and the first light source (21A) and the third light source (21C) are turned off when the vehicle travels at medium speed,
wherein the first light source (21A) that forms the first light distribution region (50A) is turned on and the second light source (21B) and the third light source (21C) are turned off when the vehicle travels at high speed, and
wherein a length of each of the light distribution regions (50A, 50B, 50C) is increased in a traveling direction of the vehicle as the speed of the vehicle is increased.

## Patentansprüche

1. Straßenoberflächenzeichensystem (1, 301), das an einem Fahrzeug montiert ist und konfiguriert ist, um ein vorbestimmtes Bild (58) auf einer Straßenoberfläche (57) vor dem Fahrzeug zu zeichnen, wobei das Straßenoberflächenzeichensystem Folgendes aufweist:
eine Fahrpfadzeicheneinheit (10, 11, 210, 310), die konfiguriert ist, um Licht auszustrahlen und das Bild auf die Straßenoberfläche zu zeichnen; eine Fahrzeuggeschwindigkeitsdetektionseinheit (16), die konfiguriert ist, um eine Geschwindigkeit des Fahrzeugs zu detektieren; und
eine Steuereinheit (13), die konfiguriert ist, um die Fahrpfadzeicheneinheit (10, 11, 210, 310) zu steuern,
wobei die Fahrpfadzeicheneinheit (10, 11, 210, 310) eine Lichtquelleneinheit (20, 320, 320R, 320G, 320B) hat, welche eine Vielzahl von Lichtquellen (21, 321R, 321G, 321B) aufweist, weiter eine Bilderzeugungseinheit (31), die konfiguriert ist, um Licht zu modulieren, welches von der Lichtquelleneinheit (20, 320, 320R, 320G, 320B) emittiert wurde, und um das Bild (58) zu formen, und eine Projektionseinheit (41), die konfiguriert ist, um das Licht, welches das Bild (58) aufweist, auf die Straßenoberfläche (57) zu projizieren,
wobei die Steuereinheit (13) einen Lichtemissionsstärkensteuerteil (52) aufweist, der konfiguriert ist, um Lichtemissionsstärken der Vielzahl von Lichtquellen (21, 321R, 321G, 321B) individuell zu variieren,
wobei die Vielzahl von Lichtquellen (21, 321R, 321G, 321B) eine Vielzahl von entsprechenden Lichtverteilungsregionen (50A; 50B, 50C) formt, wobei die Vielzahl von Lichtverteilungsregionen (50A; 50B, 50C) auf der Straßenoberfläche (57) von einer nahegelegenen Seite des Fahrzeugs zu einer ferngelegenen Seite des Fahrzeugs ausgerichtet sind,
wobei die Steuereinheit (13) konfiguriert ist, um eine Position einer Lichtverteilungsregion aus der Vielzahl von Lichtverteilungsregionen (50A, 50B, 50C) zu bestimmen, bei der das Bild (58) gezeichnet wird, und einen Lichtemissionszustand von mindestens einer der Lichtquellen (21, 321R, 321G, 321B) zu schalten, und zwar durch individuelles Steuern einer Lichtemissionsstärke der Vielzahl von Lichtquellen (21, 321R, 321G, 321B) mit dem Lichtemissionsstärkensteuerteil (52) auf der Basis des Detektionsergebnisses der Fahrzeuggeschwindigkeitsdetektionseinheit (16), wobei der Lichtemissionsstärkensteuerteil (52) konfiguriert ist, um eine Distanz zwischen dem Bild (58) und dem Fahrzeug durch Steuerung einer Lichtemissionsstärke einer Lichtquelle zu ändern, welche aus der Vielzahl von Lichtquellen eine Lichtverteilungsregion auf der ferngelegenen Seite des Fahrzeugs formt, und zwar so, dass sie größer ist als eine Lichtemissionsstärke einer Lichtquelle, die eine Lichtverteilungsregion auf der nahegelegenen Seite des Fahrzeugs formt,
wobei die Vielzahl von Lichtverteilungsregionen (50A, 50B, 50C) aus einer ersten Lichtverteilungsregion (50A), einer zweiten Lichtverteilungsregion (50B) und einer dritten Lichtverteilungsregion (50C) besteht, die sequentiell von einer vom Fahrzeug ferngelegenen Region zu einer nahe dem Fahrzeug gelegenen Region angeordnet sind,
wobei die Vielzahl von Lichtquellen (21) eine erste Lichtquelle (21A), eine zweite Lichtquelle (21B) und eine dritte Lichtquelle (21C) aufweist, welche jeweils der ersten Lichtverteilungsregion (50A), der zweiten Lichtverteilungsregion (50B) und der dritten Lichtverteilungsregion (50C) entsprechen,
wobei die Steuereinheit (13) konfiguriert ist, um die dritte Lichtquelle (21C), welche die dritte Lichtverteilungsregion (50C) formt, anzuschalten, und die erste Lichtquelle (21A) und die zweite Lichtquelle (21B) auszuschalten, wenn das Fahrzeug mit niedriger Geschwindigkeit fährt, weiter um die zweite Lichtquelle (21B), welche die zweite Lichtverteilungsregion (50B) formt, anzuschalten und die erste Lichtquelle (21A) und die dritte Lichtquelle (21C) auszuschalten, wenn das Fahrzeug mit mittlerer Geschwindigkeit fährt, und um die erste Lichtquelle (21A), welche die erste Lichtverteilungsregion (50A) formt, anzuschalten und die zweite Lichtquelle (21B) und die dritte Lichtquelle (21C) auszuschalten, wenn das Fahrzeug mit hoher Geschwindigkeit fährt, und
wobei eine Länge von jeder der Lichtverteilungsregionen (50A; 50B, 50C) in einer Fahrrichtung des Fahrzeugs vergrößert wird, wenn die Geschwindigkeit des Fahrzeugs vergrößert wird.

2. Straßenoberflächenzeichensystem nach Anspruch 1,
wobei die Steuereinheit (13) konfiguriert ist, um den Lichtemissionszustand von mindestens einer der Lichtquellen von einem AN-Zustand auf einen AUS-Zustand auf der Basis des Detektionsergebnisses der Fahrzeuggeschwindigkeitsdetektionseinheit (16) umzuschalten.

3. Straßenoberflächenzeichensystem nach Anspruch 1 oder 2,
wobei die Projektionseinheit (41) ein Licht kondensierendes bzw. Licht bündelndes optisches System (42) aufweist, welches konfiguriert ist, um das Licht zu bündeln, welches das Bild aufweist, welches durch die Bilderzeugungseinheit (31) erzeugt wird, und um zu bewirken, dass das Licht in die Projektionseinheit (41) eintritt, und eine reflektierende Oberfläche (45a, 145a, 245a), die konfiguriert ist, um das Licht, welches durch das Liicht bündelnde optische System (42) gebündelt wird, zu reflektieren und das reflektierte Licht auf die Straßenoberfläche (57) zu projizieren, und
wobei die reflektierende Oberfläche (45a, 145a, 245a) eine Krümmung hat, die graduell von einer hinteren Seite in einer Projektionsrichtung zu einer vorderen Seite in Projektionsrichtung vergrößert ist.

4. Straßenoberflächenzeichensystem nach Anspruch 3,
wobei die Projektionseinheit (41) eine Vielzahl von reflektierenden Oberflächen (45a, 145a, 245a) aufweist, die konfiguriert sind, um Licht zu Regionen mit jeweils unterschiedlichen Entfernungen vom Fahrzeug zu projizieren, und eine Schalteinheit (146), die konfiguriert ist, um die reflektierende Oberfläche auszuwählen und zu schalten, und zwar zu irgendeiner der Vielzahl von reflektierenden Oberflächen.

5. Straßenoberflächenzeichensystem nach einem der Ansprüche 1 bis 4, wobei die Fahrpfadzeicheneinheit (10, 11, 210, 310) konfiguriert ist, um ein Lichtverteilungsmuster (P) als einen Scheinwerfer für ein Fahrzeug zu formen, während das Bild (58) angezeigt wird, welches den Fahrpfad auf der Straßenoberfläche (57) verdeutlicht.

6. Straßenoberflächenzeichensystem nach Anspruch 5,
wobei die Bilderzeugungseinheit (31) konfiguriert ist, um einen Lichtverteilungsmustererzeugungszustand, in welchem ein Lichtverteilungsmuster als das Scheinwerferlicht für ein Fahrzeug erzeugt wird, und einen Fahrpfadhervorhebungszustand, in welchem das Bild, welches den Fahrpfad hervorhebt, erzeugt wird, mit hoher Geschwindigkeit umzuschalten, und
wobei die Lichtquelleneinheit (20, 320, 320R, 320G, 320B) konfiguriert ist, um zu bewirken, dass weißes Licht in die Bilderzeugungseinheit (31) in dem Lichtverteilungsmustererzeugungszustand eintritt, und um zu bewirken, dass sichtbares Licht mit einer anderen Farbe als weißes Licht in die Bilderzeugungseinheit (31) in dem Fahrpfadhervorhebungszustand eintritt.

7. Straßenoberflächenzeichensystem nach einem der Ansprüche 1 bis 6, welches eine Fahrpfaderkennungseinheit (15) aufweist, die konfiguriert ist, um Straßenbedingungen vor dem Fahrzeug zu detektieren,
wobei die Steuereinheit (31) konfiguriert ist, um das erkannte Ergebnis der Fahrpfaderkennungseinheit (15) in dem Bild (58) wiederzugeben.

8. Straßenoberflächenzeichensystem nach einem der Ansprüche 1 bis 7, welches eine Fahrpfadinformationserfassungseinheit (17) aufweist, die konfiguriert ist, um Straßenbedingungen vor dem Fahrzeug von außen zu erfassen,
wobei die Steuereinheit (13) konfiguriert ist, um Informationen, die von der Fahrpfadinformationserfassungseinheit (17) erfasst wurden, in dem Bild (58) wiederzugeben.

9. Verfahren zum Zeichnen eine Bildes, welches einen Fahrpfad eines Fahrzeugs auf einer Straßenoberfläche vor dem Fahrzeug hervorhebt, wobei das Verfahren Folgendes aufweist:
Zeichnen des Fahrpfades durch Zeichnen des Bildes auf der Straßenoberfläche durch Ausstrahlen von Licht auf die Straßenoberfläche; und Detektieren einer Geschwindigkeit des Fahrzeugs;
wobei das Zeichnen des Fahrpfades einen Schritt des individuellen Steuerns einer Lichtemissionsstärke einer Vielzahl von Lichtquellen aufweist, weiter einen Schritt des Modulierens des ausgestrahlten Lichtes von der Vielzahl von Lichtquellen und des Formens des Bildes in einer Vielzahl von Lichtverteilungsregionen jeweils mit dem Licht, das von der Vielzahl von Lichtquellen ausgestrahlt wurde, und einen Schritt des Projizierens eines Lichtes, welches das Bild aufweist, auf die Straßenoberfläche, wobei die Vielzahl von Lichtverteilungsregionen auf der Straßenoberfläche von einer nahegelegenen Seite des Fahrzeugs zu einer ferngelegenen Seite des Fahrzeugs ausgerichtet sind,
wobei auf der Basis eines Detektionsergebnisses der detektierten Fahrzeuggeschwindigkeit eine Position einer Lichtverteilungsregion aus der Vielzahl von Lichtverteilungsregionen, bei welcher das Bild gezeichnet wird, bestimmt wird, und wobei die Lichtemissionsstärke der Vielzahl von Lichtquellen individuell gesteuert wird,
wobei eine Distanz zwischen dem Bild und dem Fahrzeug verändert wird durch Steuern einer Lichtemissionsstärke einer Lichtquelle, welche aus der Vielzahl von Lichtquellen eine Lichtverteilungsregion auf der vom Fahrzeug ferngelegenen Seite formt, und zwar so, dass sie größer ist als eine Lichtemissionsstärke einer Lichtquelle, die eine Lichtverteilungsregion auf der nahegelegenen Seite des Fahrzeugs formt,
wobei die Vielzahl von Lichtverteilungsregionen (50A, 50B, 50C) aus einer ersten Lichtverteilungsregion (50A), einer zweiten Lichtverteilungsregion (50B) und einer dritten Lichtverteilungsregion (50C) besteht, die sequentiell von einer vom Fahrzeug ferngelegenen Region zu einer nahe dem Fahrzeug gelegenen Region angeordnet sind,
wobei die Vielzahl von Lichtquellen (21) eine erste Lichtquelle (21A), eine zweite Lichtquelle (21B) und eine dritte Lichtquelle (21C) aufweist, welche jeweils der ersten Lichtverteilungsregion (50A), der zweiten Lichtverteilungsregion (50B) und der dritten Lichtverteilungsregion (50C) entsprechen,
wobei die dritte Lichtquelle (21C), welche die dritte Lichtverteilungsregion (50C) formt, angeschaltet wird und die erste Lichtquelle (21A) und die zweite Lichtquelle (21B) ausgeschaltet werden, wenn das Fahrzeug mit niedriger Geschwindigkeit fährt,
wobei die zweite Lichtquelle (21B), welche die zweite Lichtverteilungsregion (50B) formt, angeschaltet wird und die erste Lichtquelle (21A) und die dritte Lichtquelle (21C) ausgeschaltet werden, wenn das Fahrzeug mit mittlerer Geschwindigkeit fährt,
wobei die erste Lichtquelle (21A), welche die erste Lichtverteilungsregion (50A) formt, angeschaltet wird und die zweite Lichtquelle (21B) und die dritte Lichtquelle (21C) ausgeschaltet werden, wenn das Fahrzeug mit hoher Geschwindigkeit fährt, und
wobei eine Länge von jeder der Lichtverteilungsregionen (50A; 50B, 50C) in einer Fahrrichtung des Fahrzeugs vergrößert wird, wenn die Geschwindigkeit des Fahrzeugs vergrößert wird.

## Revendications

1. Système de dessin de surface d'une route (1, 301) monté sur un véhicule et configuré pour dessiner une image prédéterminée (58) sur une surface d'une route (57) devant le véhicule, le système de dessin de surface d'une route comprenant :
une unité de dessin de trajet de déplacement (10, 11, 210, 310) configurée pour émettre de la lumière et pour dessiner l'image sur la surface de la route ;
une unité de détection de la vitesse du véhicule (16) configurée pour détecter une vitesse du véhicule ; et
une unité de commande (13) configurée pour commander l'unité de dessin de chemin de déplacement (10, 11, 210, 310),
dans lequel l'unité de dessin de trajet de déplacement (10, 11, 210, 310) a une unité de source de lumière (20, 320, 320R, 320G, 320B) qui comporte une pluralité de sources de lumière (21, 321, 321R, 321G, 321B), une unité de génération d'image (31) configurée pour moduler la lumière émise par l'unité de source de lumière (20, 320, 320R, 320G, 320B) et pour former l'image (58), et une unité de projection (41) configurée pour projeter la lumière comportant l'image (58) sur la surface de la route (57),
dans lequel l'unité de commande (13) comporte une partie de commande du volume d'émission de lumière (52) configurée pour faire varier individuellement des volumes d'émission de lumière de la pluralité de sources de lumière (21, 321R, 321G, 321B),
dans lequel la pluralité de sources de lumière (21, 321R, 321G, 321B) forme une pluralité de régions de distribution de lumière (50A, 50B, 50C), respectivement, la pluralité de régions de distribution de lumière (50A, 50B, 50C) étant alignées sur la surface de la route (57) à partir d'un côté proche du véhicule vers un côté éloigné du véhicule,
dans lequel l'unité de commande (13) est configurée pour déterminer une position d'une région de distribution de lumière parmi la pluralité de régions de distribution de lumière (50A, 50B, 50C) au niveau de laquelle l'image (58) est dessinée et pour commuter un état d'émission de lumière d'au moins une des sources de lumière (21, 321R, 321G, 321B) en commandant individuellement un volume d'émission de lumière de la pluralité de sources de lumière (21, 321R, 321G, 321B) avec la partie de commande du volume d'émission de lumière (52) sur la base du résultat de détection de l'unité de détection de la vitesse du véhicule (16),
dans lequel la partie de commande du volume d'émission de lumière (52) est configurée pour modifier une distance entre l'image (58) et le véhicule en commandant un volume d'émission de lumière d'une source de lumière qui forme une région de distribution de lumière au niveau du côté éloigné du véhicule parmi la pluralité de sources de lumière pour qu'elle soit plus grande qu'un volume d'émission de lumière d'une source de lumière qui forme une région de distribution de lumière au niveau du côté proche du véhicule ;
dans lequel la pluralité de régions de distribution de lumière (50A, 50B, 50C) est constituée d'une première région de distribution de lumière (50A), d'une deuxième région de distribution de lumière (50B) et d'une troisième région de distribution de lumière (50C) qui sont agencées séquentiellement depuis une région éloignée du véhicule jusqu'à une région proche du véhicule,
dans lequel la pluralité de sources de lumière (21) comporte une première source de lumière (21A), une deuxième source de lumière (21B) et une troisième source de lumière (21C) qui correspond à la première région de distribution de lumière (50A), à la deuxième région de distribution de lumière (50B) et à la troisième région de distribution de lumière (50C), respectivement,
dans lequel l'unité de commande (13) est configurée pour activer la troisième source de lumière (21C) qui forme la troisième région de distribution de lumière (50C) et pour désactiver la première source de lumière (21A) et la deuxième source de lumière (21B) lorsque le véhicule se déplace à faible vitesse, pour activer la deuxième source de lumière (21B) qui forme la deuxième région de distribution de lumière (50B) et pour désactiver la première source de lumière (21A) et la troisième source de lumière (21C) lorsque le véhicule se déplace à vitesse moyenne, et pour activer la première source de lumière (21A) qui forme la première région de distribution de lumière (50A) et pour désactiver la deuxième source de lumière (21B) et la troisième source de lumière (21C) lorsque le véhicule se déplace à grande vitesse, et
dans lequel une longueur de chacune des régions de distribution de lumière (50A, 50B, 50C) est accrue dans une direction de déplacement du véhicule lorsque la vitesse du véhicule augmente.

2. Système de dessin de surface d'une route selon la revendication 1,
dans lequel l'unité de commande (13) est configurée pour commuter l'état d'émission de lumière au niveau d'au moins une des sources de lumière depuis un état activé vers un état désactivé sur la base du résultat de détection de l'unité de détection de la vitesse du véhicule (16).

3. Système de dessin de surface d'une route selon la revendication 1 ou 2,
dans lequel l'unité de projection (41) comporte un système optique de condensation de lumière (42) configuré pour condenser la lumière comportant l'image générée par l'unité de génération d'image (31) et pour amener la lumière à entrer dans l'unité de projection (41), et une surface réfléchissante (45a, 145a, 245a) configurée pour réfléchir la lumière condensée par le système optique de condensation de lumière (42) et pour projeter la lumière réfléchie sur la surface de la route (57), et
la surface réfléchissante (45a, 145a, 245a) a une courbure qui augmente progressivement depuis un côté arrière dans une direction de projection vers un côté avant dans la direction de projection.

4. Système de dessin de surface d'une route selon la revendication 3,
dans lequel l'unité de projection (41) comporte une pluralité de surfaces réfléchissantes (45a, 145a, 245a) configurées pour projeter de la lumière vers des régions se trouvant à différentes distances du véhicule, respectivement, et une unité de commutation (146) configurée pour sélectionner et commuter la surface réfléchissante sur l'une quelconque de la pluralité de surfaces réfléchissantes.

5. Système de dessin de surface de route selon l'une quelconque des revendications 1 à 4,
dans lequel l'unité de dessin de trajet de déplacement (10, 11, 210, 310) est configurée pour former un motif de distribution de lumière (P) en tant que phare pour un véhicule tout en affichant l'image (58) qui fait ressortir le trajet de déplacement sur la surface de la route (57).

6. Système de dessin de surface d'une route selon la revendication 5,
dans lequel l'unité de génération d'image (31) est configurée pour commuter un état généré de motif de distribution de lumière dans lequel un motif de distribution de lumière est généré en tant que phare pour un véhicule et un état accentué du trajet de déplacement dans lequel l'image qui fait ressortir le trajet de déplacement est générée, à grande vitesse, et
l'unité de source de lumière (20, 320, 320R, 320G, 320B) est configurée pour amener une lumière blanche à entrer dans l'unité de génération d'image (31) dans l'état généré de motif de distribution de lumière et pour amener une lumière visible ayant une couleur différente de la lumière blanche à entrer dans l'unité de génération d'image (31) dans l'état accentué du trajet de déplacement.

7. Système de dessin de surface de route selon l'une quelconque des revendications 1 à 6,
comprenant une unité de reconnaissance du trajet de déplacement (15) configurée pour détecter des conditions de la route devant le véhicule,
dans lequel l'unité de commande (13) est configurée pour refléter le résultat reconnu de l'unité de reconnaissance du trajet de déplacement (15) sur l'image (58).

8. Système de dessin de surface de route selon l'une quelconque des revendications 1 à 7,
comprenant une unité d'acquisition d'informations de trajet de déplacement (17) configurée pour acquérir des conditions de la route devant le véhicule depuis l'extérieur,
dans lequel l'unité de commande (13) est configurée pour refléter des informations acquises par l'unité d'acquisition d'informations de trajet de déplacement (17) sur l'image (58).

9. Procédé de dessin d'une image qui fait ressortir un trajet de déplacement d'un véhicule sur une surface de route devant le véhicule, le procédé comprenant :
le dessin du trajet de déplacement en dessinant l'image sur la surface de la route en rayonnant de la lumière sur la surface de la route ; et
la détection d'une vitesse du véhicule ;
dans lequel le dessin du trajet de déplacement comporte une étape de commande individuelle d'un volume d'émission de lumière d'une pluralité de sources de lumière, une étape de modulation de la lumière émise par une pluralité de sources de lumière et la formation de l'image dans une pluralité de régions de distribution avec la lumière émise par la pluralité de sources de lumière, respectivement, et une étape de projection d'une lumière comportant l'image sur la surface de la route, la pluralité de régions de distribution de lumière étant alignées sur la surface de la route à partir d'un côté proche du véhicule vers un côté éloigné du véhicule,
dans lequel, sur la base d'un résultat de détection de la vitesse du véhicule détectée, une position d'une région de distribution de lumière parmi la pluralité de régions de distribution de lumière au niveau de laquelle l'image est déterminée et le volume d'émission de lumière de la pluralité de sources de lumière sont commandés individuellement,
dans lequel une distance entre l'image et le véhicule est modifiée en commandant un volume d'émission de lumière d'une source de lumière qui forme une région de distribution de lumière au niveau du côté éloigné du véhicule parmi la pluralité de sources de lumière pour qu'elle soit plus grande qu'un volume d'émission de lumière d'une source de lumière qui forme une région de distribution de lumière au niveau du côté proche du véhicule,
dans lequel la pluralité de régions de distribution de lumière (50A, 50B, 50C) est constituée d'une première région de distribution de lumière (50A), d'une deuxième région de distribution de lumière (50B) et d'une troisième région de distribution de lumière (50C) qui sont agencées séquentiellement depuis une région éloignée du véhicule jusqu'à une région proche du véhicule,
dans lequel la pluralité de sources de lumière (21) comporte une première source de lumière (21A), une deuxième source de lumière (21B) et une troisième source de lumière (21C) qui correspond à la première région de distribution de lumière (50A), à la deuxième région de distribution de lumière (50B) et à la troisième région de distribution de lumière (50C), respectivement,
dans lequel la troisième source de lumière (21C) qui forme la troisième région de distribution de lumière (50C) est activée et la première source de lumière (21A) et la deuxième source de lumière (21B) sont désactivées lorsque le véhicule se déplace à faible vitesse,
dans lequel la deuxième source de lumière (21B) qui forme la deuxième région de distribution de lumière (50B) est activée et la première source de lumière (21A) et la troisième source de lumière (21C) sont désactivées lorsque le véhicule se déplace à vitesse moyenne, et
dans lequel la première source de lumière (21A) qui forme la première région de distribution de lumière (50A) est activée et la deuxième source de lumière (21B) et la troisième source de lumière (21C) sont désactivées lorsque le véhicule se déplace à grande vitesse, et
dans lequel une longueur de chacune des régions de distribution de lumière (50A, 50B, 50C) est accrue dans une direction de déplacement du véhicule lorsque la vitesse du véhicule augmente.
